# EUROPEAN PATENT APPLICATION

(11) **EP 3 276 847 A1**
(43) Date of publication of application: **31.01.2018**
(21) Application number: 17183762.8
(22) Date of filing: 28.07.2017
(51) Int. Cl.: H04B 7/0404, H04B 7/06

(54) **METHOD AND APPARATUS FOR HANDLING UE BEAMFORMING IN A WIRELESS COMMUNICATION SYSTEM**

(30) Priority: 28.07.2016 US 201662368009 P
(71) Applicant: ASUSTek Computer Inc., Peitou, Taipei-City 112 (TW)
(72) Inventor: GUO, Yu-Hsuan, Taipei City 112 (TW); TSAI, Hsin-Hsi, Taipei City 112 (TW); OU, Meng-Hui, Taipei City 112 (TW)
(74) Representative: Hoefer & Partner Patentanwälte mbB

(57) **Abstract**

A method for a wireless communications system is disclosed. In one example, a network node transmits an indication to a UE to enable or disable UE beamforming (2202). The indication also serves to initiate a random access procedure. The indication is transmitted together with other information (2204). The other information can include configuration information related to random access. The indication and the other information can be provided via the same RRC message. The UE initiates a random access procedure in response to receiving the indication.

## Description

The subject disclosure is directed to wireless communications, and is more particularly related to beamforming by a user equipment (UE) (e.g. a mobile phone) operating in a cell (e.g. a 5G cell).

The 3rd Generation Partnership Project (3GPP) is a group that is trying to investigate and develop technology components for the next generation access technology, namely 5G. 3GPP commenced its standardization activities vis-a-vis the 5G in March of 2015. 3GPP regularly publishes its meeting notes that describe its proposals, reference architecture models and study items for 5G. For example, 3GPP envisions a single cell architecture that contains multiple TRPs (also referred to as distributed units (DUs)) and supports intra-cell mobility of the UE as it travels among the TRPs. This architecture presents numerous challenges to which the inventions disclosed herein provide solutions.

### SUMMARY

Methods according to the invention are defined in independent claims 1, 6, 13 and 14, respectively. Preferred embodiments thereof are defined in the dependent claims.The following presents a simplified summary of the specification to provide a basic understanding of some aspects of the specification. This summary is not an extensive overview of the specification. It is intended to neither identify key or critical elements of the specification nor delineate any scope particular to any embodiments of the specification, or any scope of the claims. Its sole purpose is to present some concepts of the specification in a simplified form as a prelude to the more detailed description that is presented later.

As used herein, the following terms can be referred to by the respective abbreviations: 3rd Generation Partnership Project (3GPP); 5th generation (5G); Beam Specific Reference Signal (BRS); Base Station (BS); Cloud RAN (C-RAN); Cell Radio Network Temporary Identifier (C-RNTI); Connected State (CONN); Control Plane (CP); Channel Quality Indicator (CQI); Channel State Information (CSI); Central Unit (CU); Downlink (DL); Downlink Shared Channel (DL-SCH); Distributed Unit (DU); Evolved Node B (eNB or eNodeB); Evolved Universal Terrestrial Radio Access (E-UTRA); Hybrid Automatic Repeat Request (HARQ); Long Term Evolution (LTE); Medium Access Control (MAC); Multiple Input, Multiple Output (MIMO); Message (Msg); Non-Access Stratum (NAS); Network Function Virtualization (NFV); New RAT (NR); Network (NW); Physical Downlink Control Channel (PDCCH); Physical Downlink Shared Channel (PDSCH); Physical (PHY); Physical Random Access Channel (PRACH); Physical Uplink Control Channel (PUCCH); Physical Uplink Shared Channel (PUSCH); Random access (RA); Random access-Radio Network Temporary Identifier (RA-RNTI); Random access channel (RACH); Random Access Network (RAN); Radio Access Technology (RAT); Radio Link Control (RLC); Radio Resource Control (RRC); Reception (Rx); Secondary Cell (SCell); Signal to Interference Plus Noise Ratio (SINR); Semi-persistent Scheduling (SPS); Scheduling Request (SR); Secondary Timing Advance Group (sTAG); Transparent Mode (TM); Transmission Reception Point (TRP); TRP Group (TRPG); Technical Specification (TS); Transmission Time Interval (TTI); Transmission (Tx); User Equipment (UE) (also referred to as UE device); Uplink (UL); Uplink Shared Channel (UL-SCH); and Universal Terrestrial Radio Access (UTRA).

In various non-limiting example embodiments, by way of example, the disclosed subject matter provides a method for a network mode, in which the network node transmits an indication to enable or disable UE beamforming to a UE. The indication also serves to initiate a random access procedure.

Preferably, the indication is transmitted together with other information. The other information can include configuration information related to random access. The indication and the other information can be provided via the same RRC message.

Preferably, a UE receives an indication to enable or disable UE beamforming. The UE initiates a random access procedure and enables beamforming in response to receiving the indication.

Embodiments of the subject disclosure provide procedures and methodologies for enabling beamforming. Some of the methodologies provide for determining/selecting the UE beam(s) that are to be used after the UE beamforming has been enabled. These and other features of the disclosed subject matter are described in more detail below.

### BRIEF DESCRIPTION OF THE DRAWINGS

The devices, components, systems, and methods of the disclosed subject matter are further described with reference to the accompanying drawings in which:
FIG. 1 illustrates the beam concept in 5G, where each TRP is generating multiple narrow beams, for example, as part of beam sweeping;
FIG. 2 illustrates exemplary radio network architectures that the 3GPP desires to support with NR including, for example, stand-alone, co-sited with LTE and centralized baseband architectures.
FIG. 3 illustrates more exemplary radio network architectures that the 3GPP desires to support with NR including, for example, centralized with low performance transport and shared RAN;
FIG. 4 illustrates various example deployment scenarios for arrangement of cells having a single TRP;
FIG. 5 illustrates various example deployment scenarios for arrangement of cells having multiple TRPs;
FIG. 6 illustrates an example 5G cell;
FIG. 7 illustrates side-by-side comparison between an example 4G cell and an example 5G cell;
FIG. 8 illustrates example limitations on beam combinations for beam generation;
FIG. 9 illustrates an example high frequency HF-NR system that facilitates gain compensation by beamforming;
FIG. 10 illustrates an example HF-NR system that facilitates weakened interference by beamforming;
FIG. 11 illustrates the principle of a sweeping subframe;
FIG. 12 illustrates the association between the BS beams and the PRACH resources;
FIG. 13 illustrates an example of beam sweeping;
FIG. 14 illustrates an example methodology for enabling/disabling UE beamforming in a connected state;
FIG. 15 illustrates example alternative methodologies for enabling UE beamforming;
FIG. 16 illustrates example alternative methodologies for disabling UE beamforming;
FIG. 17 illustrates an example methodology for adjusting UL transmission power of a scheduling request;
FIG.18 illustrates another example methodology for transmission of a confirmation or complete message;
FIG. 19 illustrates meanings of icons related to beamforming;
FIG. 20 illustrates an example methodology for implementing contention based random access procedure;
FIG. 21 illustrates an example methodology for implementing non-contention based random access procedure;
FIG. 22 and FIG. 27 illustrate two example methodologies for the network node;
FIG. 23, FIG. 24, FIG. 25, FIG. 26 and FIG. 28 illustrate various example methodologies for a UE;
FIG. 29 illustrates and example multiple access wireless communication system in which various embodiments directed to concurrent UL transmissions and concurrent DL transmissions can be implemented;
FIG. 30 illustrates a simplified block diagram of an example MIMO system depicting an example embodiment of a transmitter system (also referred to herein as an access network) and a receiver system (also referred to herein as an access terminal (AT) or user equipment (UE)), suitable for incorporation of various aspects directed to various networks, TRPs and UEs described herein;
FIG. 31 depicts an example non-limiting device or system suitable for performing various aspects of the disclosed subject matter;
FIG. 32 depicts a simplified functional block diagram of an example non-limiting communication device suitable for incorporation of various aspects of the subject disclosure;
FIG. 33 depicts a simplified block diagram of example program code shown in FIGS. 14-32, suitable for incorporation of various aspects of the subject disclosure; and
FIG. 34 illustrates a schematic diagram of an example mobile device (e.g. a mobile handset, user device, user equipment, or access terminal) that can facilitate various non-limiting aspects of the disclosed subject matter in accordance with the embodiments described herein.

### DETAILED DESCRIPTION

The 5G technology aims to support the following three families of usage scenarios, and specifically to satisfy both urgent market needs and more long-term requirements set forth by the ITU-R IMT-2020: (i) eMBB (enhanced Mobile Broadband), (ii) mMTC (massive Machine Type Communications) and (iii) URLLC (Ultra-Reliable and Low Latency Communications). An objective of 3GPP's 5G study item on new radio access technology is to identify and develop technology components for new radio systems that can operate in any spectrum band ranging from low frequencies to at least 100 GHz. However, radio systems that try to support high carrier frequencies (e.g. up to 100 GHz) will encounter a number of challenges in the area of radio propagation. For example, with increasing carrier frequency, the path loss would also increase.

According to R2-162366 (3GPP TSG-RAN WG2 Meeting #93bis), in lower frequency bands (e.g. in current Long Term Evolution (LTE) bands < 6GHz), the required cell coverage is provided by forming a wide sector beam for transmitting downlink common channels. However, utilizing wide sector beam on higher frequencies (>> 6GHz) is problematic in that the cell coverage is reduced for the same antenna gain. Thus, in order to provide the required cell coverage on higher frequency bands, higher antenna gain is needed to compensate for the increased path loss. To increase the antenna gain over a wide sector beam, larger antenna arrays, where the number of antenna elements range from tens to hundreds, are used to form high gain beams. As a consequence, the high gain beams are formed narrower than a typical wide sector beam, and so multiple high gain beams are needed for transmitting downlink common channels to cover the required cell area. The number of concurrent high gain beams that an access point is able to form is limited by the cost and complexity of the utilized transceiver architecture. In practice, for higher frequencies, the number of concurrent high gain beams is much less than the total number of beams required to cover the cell area. In other words, the access point is able to cover only a portion of the cell area by using a subset of beams at any given time.

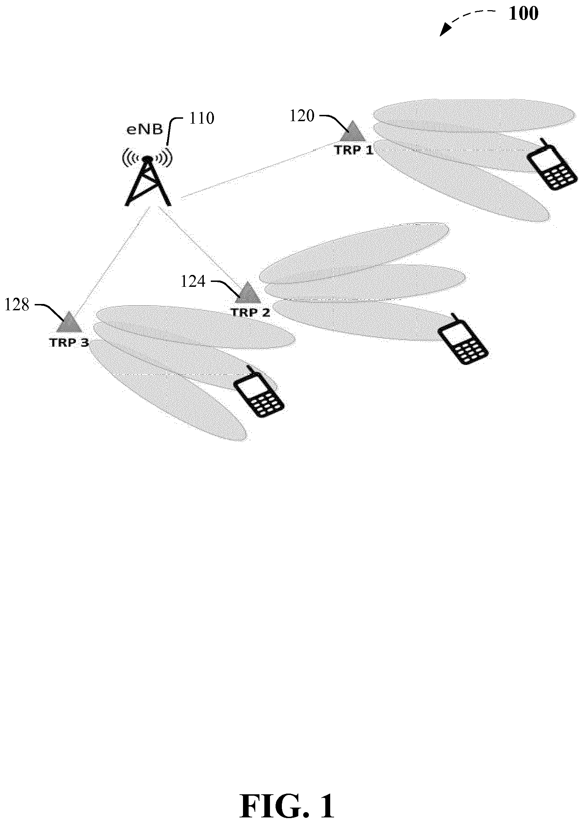

According to R2-163716 (3GPP TSG-RAN WG2 Meeting #94), beamforming is a signal processing technique used in antenna arrays for directional signal transmission/reception. In beamforming, a beam is be formed by combining elements in a phased array of antennas in such a way that signals at particular angles experience constructive interference while others experience destructive interference. Different beams are formed simultaneously using multiple arrays of antennas. According to R2-162709 (3GPP TSG RAN WG2 Meeting #93bis) and as shown in Figure 1, the 5G cell 100 includes an evolved Node B (eNB) 110 communicably coupled to multiple transmission/reception points (TRPs) 120, 124 and 128, which can be either centralized or distributed. Each TRP 120, 124 or 128 can and is shown to form multiple beams. The number of beams formed by the TRP 120, 124 or 128 and the number of simultaneous beams in the time/frequency domain depend on the number of antenna array elements and the radio frequency RF being utilized by the TRP 120, 124 or 128.

Potential mobility types for the new radio access technology (NR) include intra-TRP mobility, inter-TRP mobility and inter-NR eNB mobility. According to R2-162762 (TSG RAN WG2 Meeting #93bis), the reliability of a system purely relying on beamforming and operating at higher frequencies is subject to challenges. A reason being that the coverage of such a system is more sensitive to both time and space variations. As a consequence, the signal to interference plus noise ratio (SINR) of its link (which is narrower than LTE) can drop much quicker than in the case of LTE.

In the 5G systems, fairly regular grid-of-beams coverage patterns with tens or hundreds of candidates for serving beams per node can be created, by using antenna arrays having hundreds of elements at access nodes. However, the coverage area of an individual serving beam from such an array would be small, down to the order of some tens of meters in width. As a consequence, channel quality degradation outside a currently-in-use serving beam's area would happen quicker than in the case of wide area coverage (e.g. as provided by LTE).

According to 3GPP TS 36.300 v 13.4.0 Release 13, the random access procedure is performed for the following events related to the PCell:
- Initial access from RRC_IDLE;
- RRC Connection Re-establishment procedure;
- Handover;
- DL data arrival during RRC_CONNECTED requiring random access procedure:
   - E.g. when UL synchronisation status is "non-synchronised".
- UL data arrival during RRC_CONNECTED requiring random access procedure:
   - E.g. when UL synchronisation status is "non-synchronised" or there are no PUCCH resources for SR available.
- For positioning purpose during RRC_CONNECTED requiring random access procedure;
   - E.g. when timing advance is needed for UE positioning.
The random access procedure is also performed on a SCell to establish time alignment for the corresponding sTAG.
Furthermore, the random access procedure takes two distinct forms:
- Contention based (applicable to first five events);
- Non-contention based (applicable to only handover, DL data arrival, positioning and obtaining timing advance alignment for a sTAG).
Normal DL/UL transmission can take place after the random access procedure.

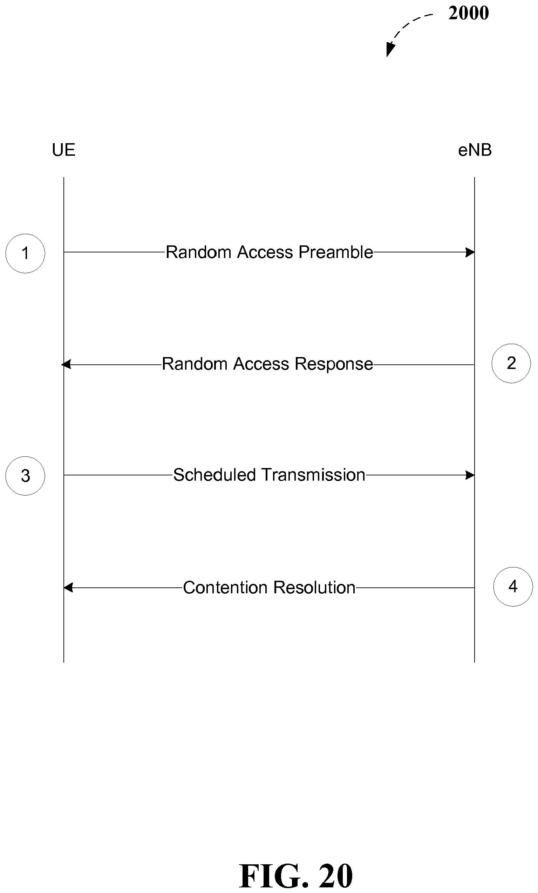

In LTE, two types of RA procedure are defined: contention-based and contention-free (Non-contention based). Figure 20 illustrates a methodology 2000 for contention based random access procedure. As illustrated in the flow diagram 2000 (and according to 3GPP TS 36.300 v 13.4.0 Release 13), the four steps of the contention based random access procedures are:
1) Random Access Preamble on RACH in uplink (Msg1):
   - There are two possible groups defined and one is optional. If both groups are configured the size of message 3 and the pathloss are used to determine which group a preamble is selected from. The group to which a preamble belongs provides an indication of the size of the message 3 and the radio conditions at the UE. The preamble group information along with the necessary thresholds are broadcast on system information.
2) Random Access Response generated by MAC on DL-SCH (Msg2):
   - Semi-synchronous (within a flexible window of which the size is one or more TTI) with message 1;
   - No HARQ;
   - Addressed to RA-RNTI on PDCCH;
   - Conveys at least RA-preamble identifier, Timing Alignment information for the pTAG, initial UL grant and assignment of Temporary C-RNTI (which may or may not be made permanent upon Contention Resolution);
   - Intended for a variable number of UEs in one DL-SCH message.
3) First scheduled UL transmission on UL-SCH (Msg3):
   - Uses HARQ;
   - Size of the transport blocks depends on the UL grant conveyed in step 2.
   - For initial access:
      - Conveys the RRC Connection Request generated by the RRC layer and transmitted via CCCH;
      - Conveys at least NAS UE identifier but no NAS message;
      - RLC TM: no segmentation.
   - For RRC Connection Re-establishment procedure:
      - Conveys the RRC Connection Re-establishment Request generated by the RRC layer and transmitted via CCCH;
      - RLC TM: no segmentation;
      - Does not contain any NAS message.
   - After handover, in the target cell:
      - Conveys the ciphered and integrity protected RRC Handover Confirm generated by the RRC layer and transmitted via DCCH;
      - Conveys the C-RNTI of the UE (which was allocated via the Handover Command);
      - Includes an uplink Buffer Status Report when possible.
   - For other events:
      - Conveys at least the C-RNTI of the UE.
4) Contention Resolution on DL (Msg4):
   - Early contention resolution shall be used i.e. eNB does not wait for NAS reply before resolving contention;
   - Not synchronised with message 3;
   - HARQ is supported;
   - Addressed to:
      - The Temporary C-RNTI on PDCCH for initial access and after radio link failure;
         - The C-RNTI on PDCCH for UE in RRC CONNECTED.
   - HARQ feedback is transmitted only by the UE which detects its own UE identity, as provided in message 3, echoed in the Contention Resolution message;
   - For initial access and RRC Connection Re-establishment procedure, no segmentation is used (RLC-TM).
The Temporary C-RNTI is promoted to C-RNTI for a UE which detects RA success and does not already have a C-RNTI; it is dropped by others. A UE which detects RA success and already has a C-RNTI, resumes using its C-RNTI.

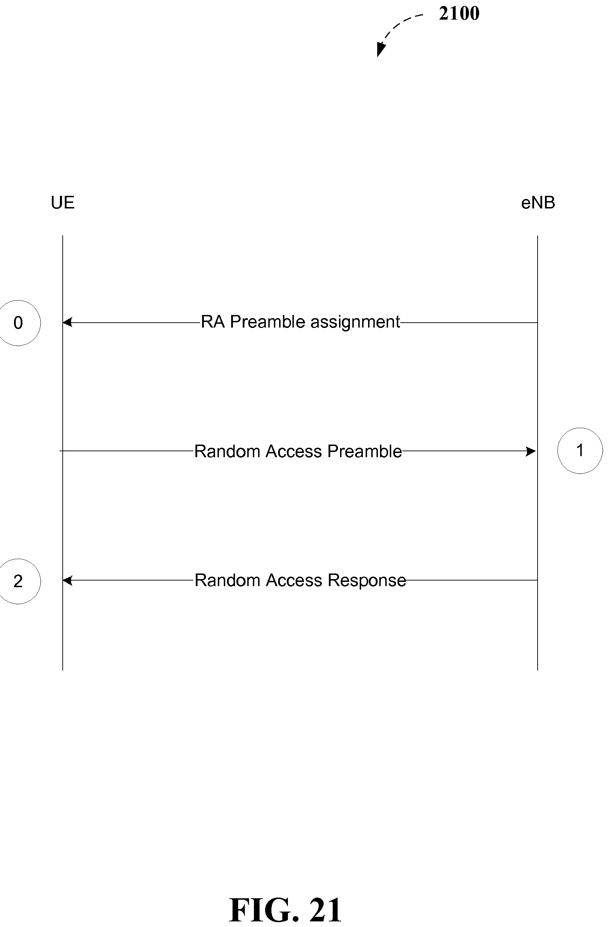

Figure 21 illustrates a methodology 2100 for non-contention based (contention free) random access procedure. As illustrated in the flow diagram 2100 (and according to 3GPP TS 36.300 v 13.4.0 Release 13), the three steps of the non-contention based random access procedures are:
0) Random Access Preamble assignment via dedicated signalling in DL (Msg0):
   - eNB assigns to UE a non-contention Random Access Preamble (a Random Access Preamble not within the set sent in broadcast signalling).
   - Signalled via:
      - HO command generated by target eNB and sent via source eNB for handover;
      - PDCCH in case of DL data arrival or positioning;
      - PDCCH for initial UL time alignment for a sTAG.
1) Random Access Preamble on RACH in uplink (Msg1):
   - UE transmits the assigned non-contention Random Access Preamble.
2) Random Access Response on DL-SCH (Msg2):
   - Semi-synchronous (within a flexible window of which the size is two or more TTIs) with message 1;
   - No HARQ;
   - Addressed to RA-RNTI on PDCCH;
   - Conveys at least:
      - Timing Alignment information and initial UL grant for handover;
      - Timing Alignment information for DL data arrival;
      - RA-preamble identifier;
      - Intended for one or multiple UEs in one DL-SCH message.

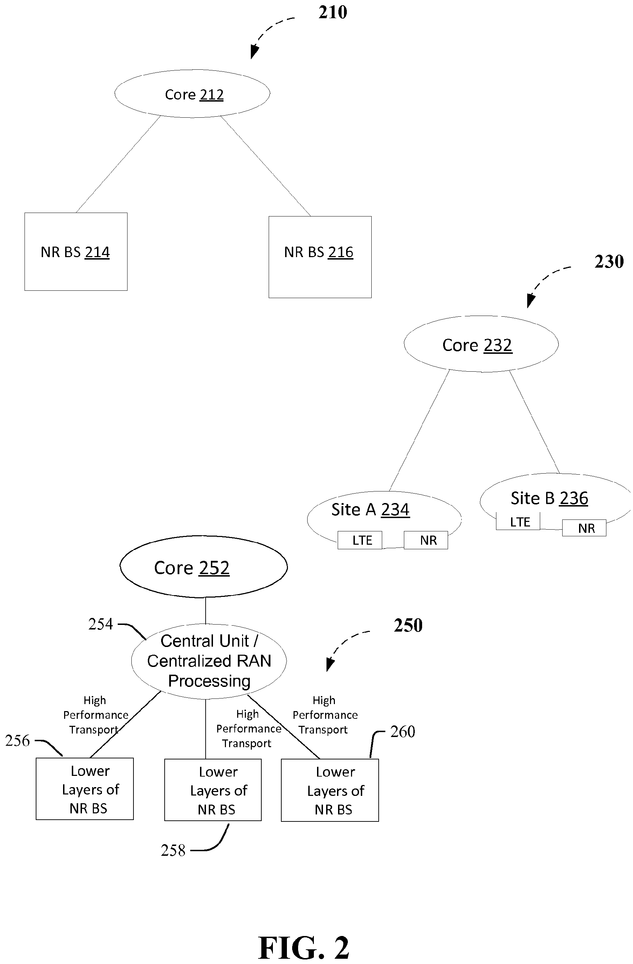

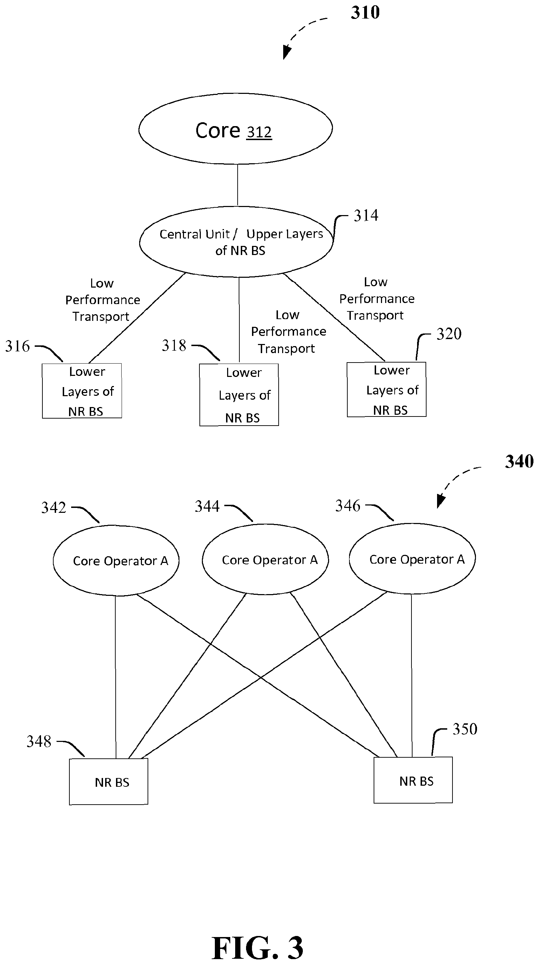

According to R3-160947 (3GPP TR 38.801 V0.1.0 (2016-04)), the scenarios illustrated in Figures 2 and 3 show exemplary radio network architectures that the 3GPP desires to support with the NR. Figure 2 illustrates three example network architectures 210, 230 and 250. In the network architecture 210, the core network 212 is shown communicably coupled to two NR base stations 214 and 216.

In the network architecture 230, the core network 232 is communicably coupled to Sites A 234 and Site B 236, wherein those sites support both NR and LTE functionality. In network architecture 250, the core network 252 is communicably coupled to a central baseband unit 254, which serves as the central unit of the architecture 252 and performs centralized radio access network (RAN) processing. The central baseband unit 254, in turn, is communicably coupled to the lower layers of the NR base stations 256, 258 and 260 by way of high performance transport links.

Figure 3 illustrates two more example radio network architectures 310 and 340 that the 3GPP desires to support with NR. In architecture 310, the core network 312 is communicably coupled to the central unit 314 that includes the upper layers of the NR base station. The central unit 314, in turn, is communicably coupled to the lower layers of the NR base stations 316, 318 and 320 via low performance transport links. In architecture 340, each core network operator 342, 344 and 346 is communicably coupled to both the NR base stations 348 and 350.

According to R2-164306 (3GPP TSG-RAN WG2 #94), the 3GPP desires to study the deployments of cell layouts for standalone NR in macro cells, heterogeneous cells and small cells. According to 3GPP TSG-RAN WG2 #94 meeting minutes for the May 23-26, 2016 meeting, one NR eNB corresponds to one or many TRPs. Typically, network controlled mobility involves two levels. In one level, the mobility control is driven by the RRC at the cell level. In the other level, there is zero or minimum involvement by the RRC (e.g. at MAC/PHY layers). According to R2-162210 (3GPP TSG-RAN WG2 Meeting #93bis), 3GPP desires to keep the principle of 2-level mobility handling in NR. One level would include cell level mobility and the other level would include beam level mobility management. Regarding cell level mobility, the cell selection or reselection occurs when the UE (or mobile device) is in IDLE state and the handover occurs when the UE or mobile device is in connected (CONN) state. The mobility control is driven by the RRC in the CONN state. Regarding beam level management, layer 1 (L1 or physical layer) handles appropriate selection of the TRP to be used by a UE (or a mobile device) and also handles the optimal beam direction.

5G systems are expected to rely heavily on "beam based mobility" to handle UE mobility, in addition to relying on the conventional handover based UE mobility. Technologies like MIMO, fronthauling, C-RAN and NFV will allow the coverage area controlled by a single 5G node to grow, thus increasing the possible applications for beam level management and reducing the need for cell level mobility. All mobility within the coverage area of one 5G node could be handled based on beam level management. In that scenario, handovers would only occur in case of UE mobility from the coverage area of one 5G node to the coverage area of another 5G node.

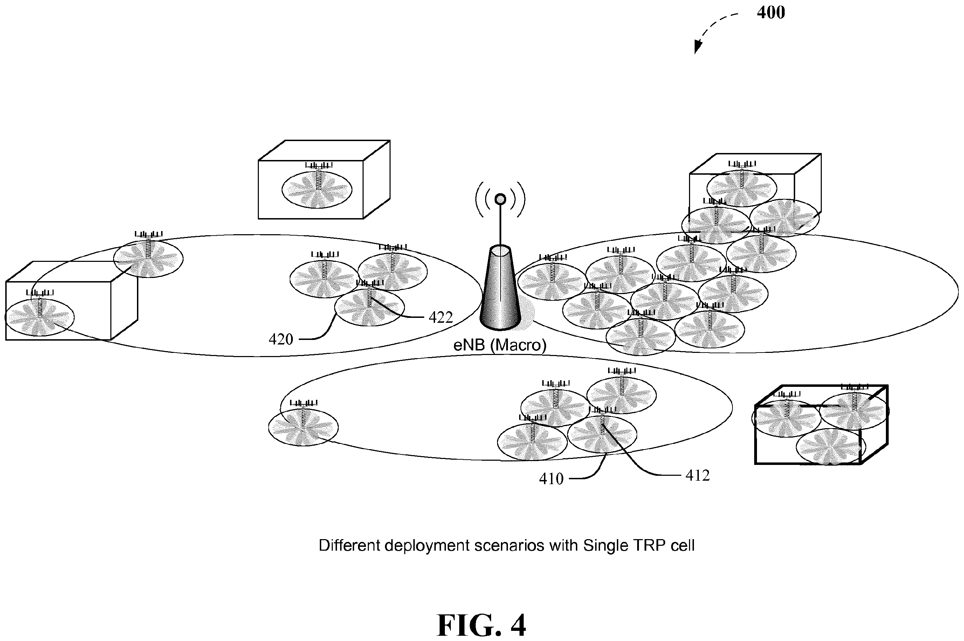

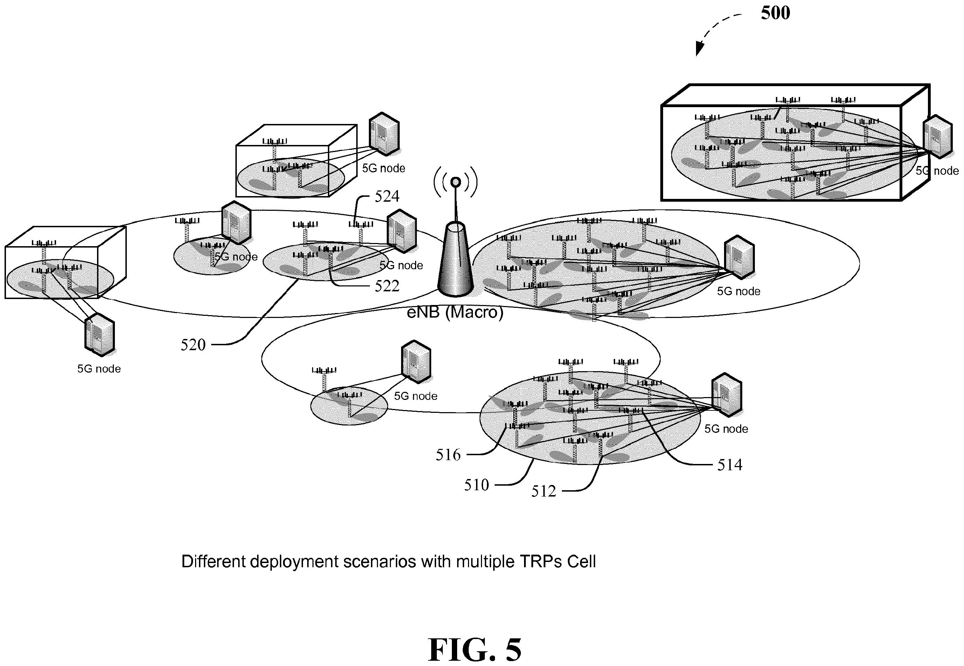

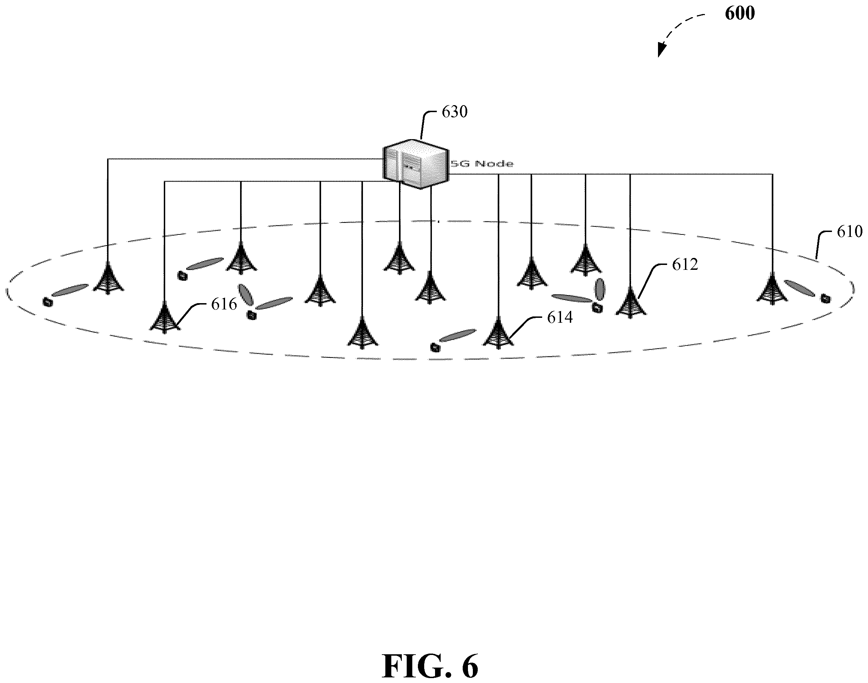

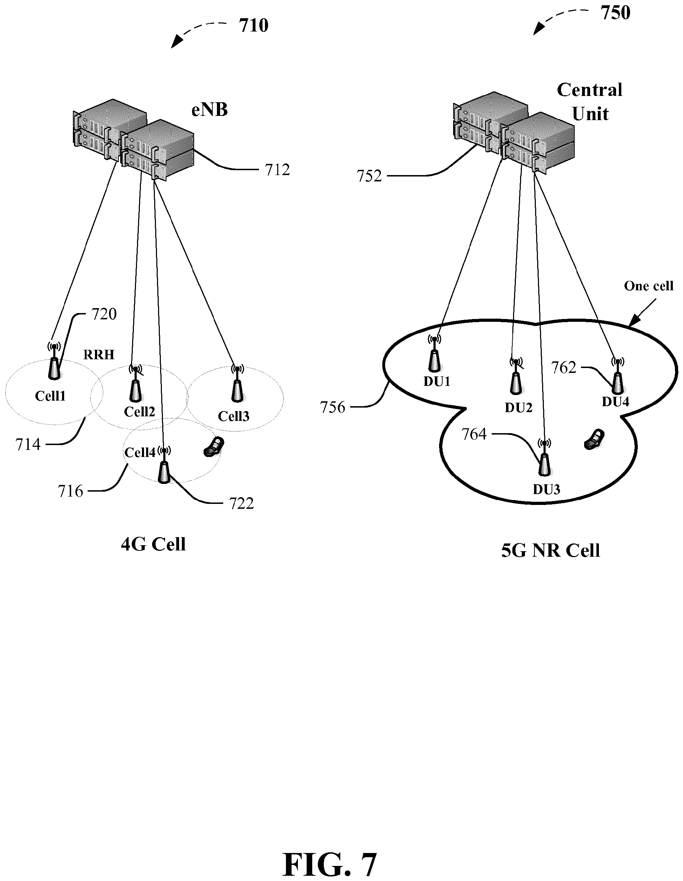

Figures 4, 5, 6 and 7 show some examples of cell design in 5G NR. Figure 4 shows an example deployment with a single-TRP cell. The deployment 400 includes numerous cells having a single TRP, for example cell 410 includes TRP 412 and cell 420 includes TRP 422. Some cells are clustered together and others are isolated. Figure 5 shows an example deployment with multiple-TRP cells. The deployment 500 includes a cell 510 having multiple TRPs 512, 514 and 516. The deployment 500 also includes a cell 520 having TRPs 522 and 524. Figure 6 shows an example deployment 600 having one 5G cell 610 comprising a 5G node 630 and multiple TRPs 612, 614 and 616. Figure 7 shows a comparison between a LTE cell 710 and a 5G NR cell 750. The LTE cell 710 includes an eNB 712 communicably coupled to multiple cells 714 and 716. Cell 714 is shown to include TRP 720 and cell 716 is shown to include TRP 722. The NR cell 750 includes a centralized unit 752 communicably coupled to a single-cell 756. The single-cell 756 includes multiple distributed units (DU) 762 and 764. It will be understood that apart from performing a handover based on Radio Research Management (RRM) measurement, 3GPP desires that a 5G UE should be able to adapt the serving beam to maintain 5G connectivity even in case of beam quality fluctuation and/or UE intra-cell mobility. However, in order to do that, 5G Node-B and UE must be able to track and change the serving beam properly (referred to as beam tracking hereafter).

Some terminology and assumption are specified in the following and may be used hereafter. The term base station (BS), as used in the subject disclosure, refers to a network central unit in the NR that is used to control one or multiple TRPs associated with one or multiple cells. Communication between BS and TRP(s) can occur via a fronthaul connection. A BS could also be referred to as central unit (CU), eNB, or NodeB. A TRP, as used herein, is a transmission and reception point that provides network coverage and directly communicates with UEs. A TRP could also be referred to as a distributed unit (DU). A cell, as used herein, is composed of one or multiple associated TRPs, i.e. the coverage of the cell is a superset of the coverage of all the individual TRP(s) associated with the cell. One cell is controlled by one BS. A cell can also be referred to as a TRP group (TRPG). Beam sweeping is used to cover all possible directions for transmission and/or reception. For beam sweeping, numerous beams are required. As it is not possible to generate all these beams concurrently, beam sweeping means generation of a subset of these beams in one time interval and generation of different subsets of beam(s) in other time interval(s). Stated differently, beam sweeping means changing beams in time domain, such that all possible directions are covered after several time intervals. Beam sweeping number refers to the necessary number of time interval(s) needed to sweep beams in all possible directions once for transmission and/or reception. The beam sweeping number indicates the number of times during a predetermined time period that various different subsets of beams must be generated to cover the desired area. A serving beam for a UE is a beam generated by a network, e.g. TRP, which is used to communicate with the UE, e.g. for transmission and/or reception.

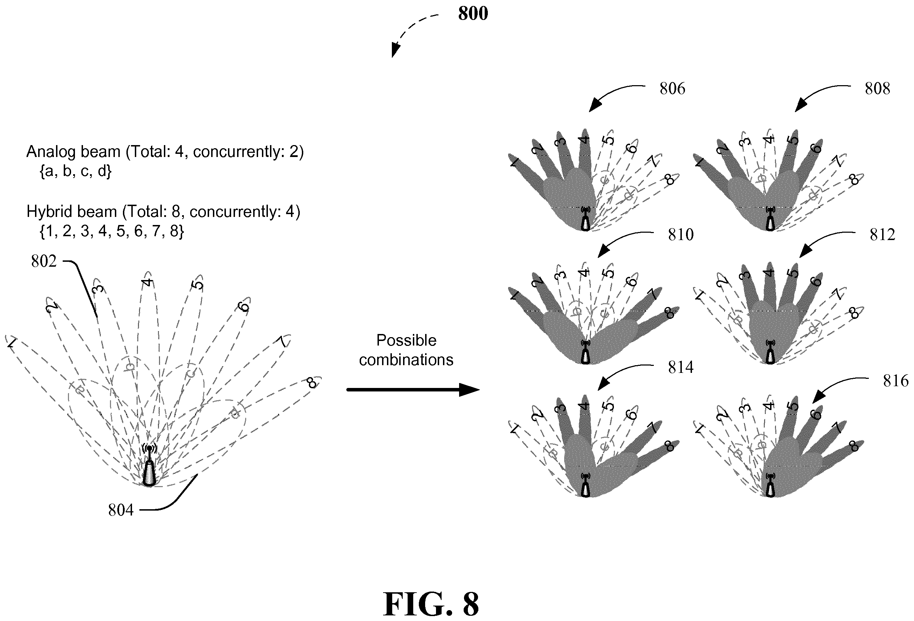

On the network side, a NR using beamforming could be standalone, meaning that the UE can directly camp on or connect to NR. A NR using beamforming and a NR not using beamforming can coexist, for example, in different cells. A TRP can apply beamforming to both data and control signaling transmissions and receptions, if possible and beneficial. The number of beams generated concurrently by a TRP depends on the TRP's capability. For example, the maximum number of beams generated concurrently by different TRPs may be different. Beam sweeping is necessary, e.g. for the control signaling to be provided in every direction. (For hybrid beamforming,) TRP may not support all beam contributions, e.g. some beams cannot be generated concurrently. Figure 8 illustrates limitations of beam combination by way of examples of possible combinations of concurrently generated beams. Possible combinations of four analog beams 804 and eight hybrid beams 802 are illustrated. Six possible combinations 806, 808, 810, 812, 814 and 816 are shown. For the analog beams 804, two beams are concurrently generated. For the hybrid beams 802, four beams are concurrently generated. In various embodiments, downlink timing of TRPs in the same cell are synchronized. The RRC layer of the network side is located in the BS. The TRP should support both UEs with UE beamforming and UEs without UE beamforming, meaning that the TRP should support UEs of different capabilities and support UE designs based on different UE releases.

On the UE side, a UE may perform beamforming for reception and/or transmission, if possible and beneficial. The number of beams generated concurrently by a UE would depend on the UE's capability, for example, depending on whether generating more than one beam is possible for the UE. Beam(s) generated by a UE are typically wider than beam(s) generated by a eNB. Beam sweeping for transmission and/or reception is generally not necessary for user data but could be necessary for other signaling, for example, to perform a measurement. (For hybrid beamforming,) as discussed above with reference to Figure 8, the UE may not support all possible beam combinations because the UE may not be able to generate some beams concurrently. Examples of possible combinations of concurrently generated beams are shown in Figure 8. It is to be appreciated that not every UE supports UE beamforming, for example, due to UE capability or because UE beamforming was not supported by NR's first few release(s). One UE is possible to generate multiple UE beams concurrently. One UE can be served by multiple serving beams from one or multiple TRPs of the same cell. Same or different DL (or UL) data could be transmitted on the same radio resource via different beams for diversity or throughput gain. There are at least two UE (RRC) states: connected state (or called active state) and non-connected state (or called inactive state or idle state).

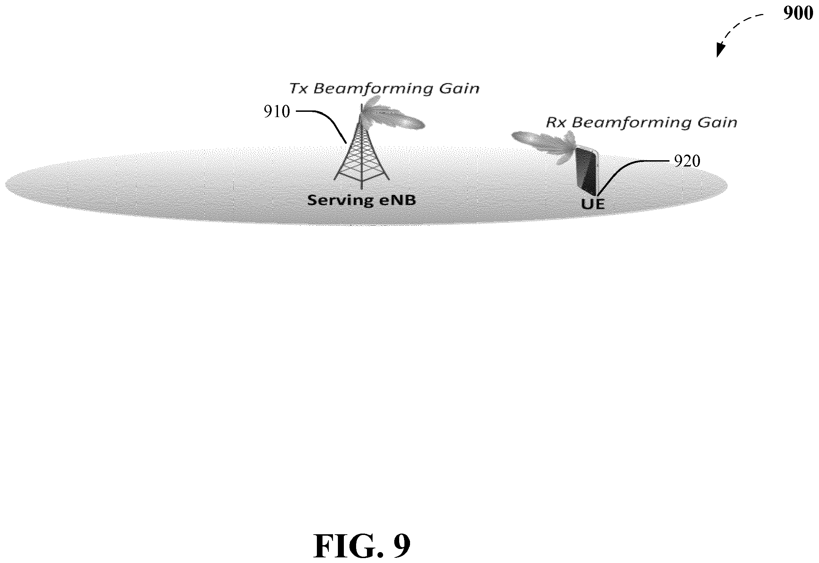

According to R2-162251 (3GPP TSG-RAN WG2 Meeting #92bis), beamforming can be performed on both eNB and UE sides. Figure 9 illustrates the concept of gain compensation by beamforming in a high frequency (HF) NR system. In the example cell 900, beamforming is performed by both the eNB 910 and the UE 920. In one practical example, 3GGP expects the beamforming antenna gain at the eNB 910 to be about 15 to 30 dBi and the expected beamforming antenna gain at the UE 920 to be about 3 to 20 dBi.

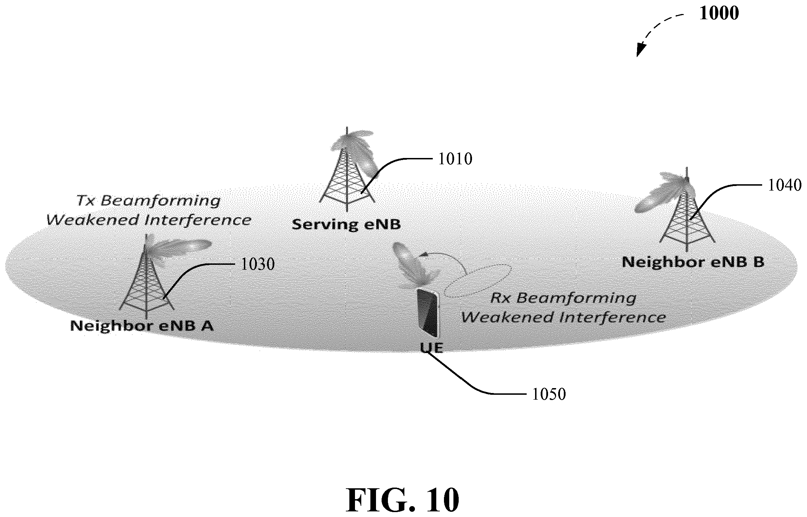

From SINR perspective, Figure 10 illustrates a cell 1000 in which interference is weakened because of beamforming. Sharp beamforming reduces interference power at the serving eNB 1010 from neighboring interferers eNB A 1030 and eNB B 1040, for example, during a downlink operation. Interference power from UEs connected to neighboring eNBs 1030, 1040 is also reduced because of beamforming. It is to be understood and appreciated that in a TX beamforming case, effective interference will be caused only by other TXs whose current beam(s) are also pointed in the direction of the RX. Effective interference means that the interference power is higher than the effective noise power. In a RX beamforming case, effective interference will be caused only by other TXs whose beam(s) are pointed in the same direction as the UE's 1050 current RX beam direction.

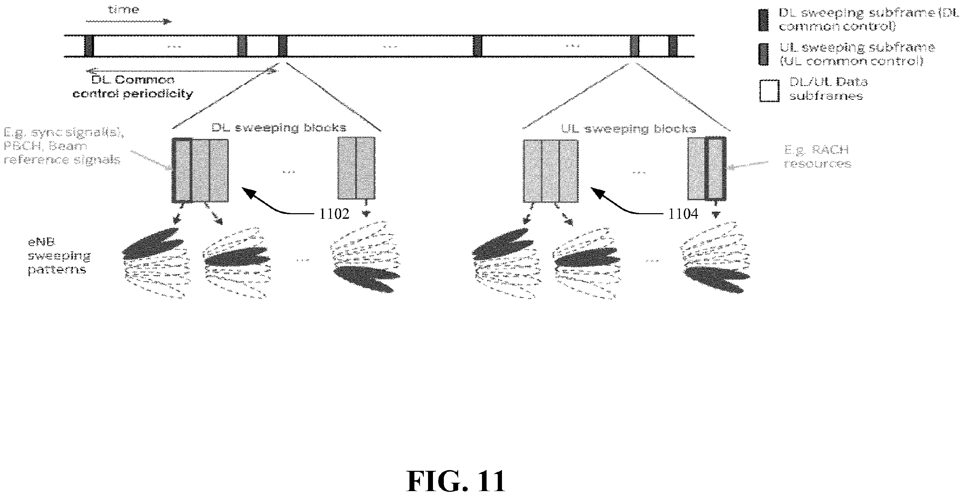

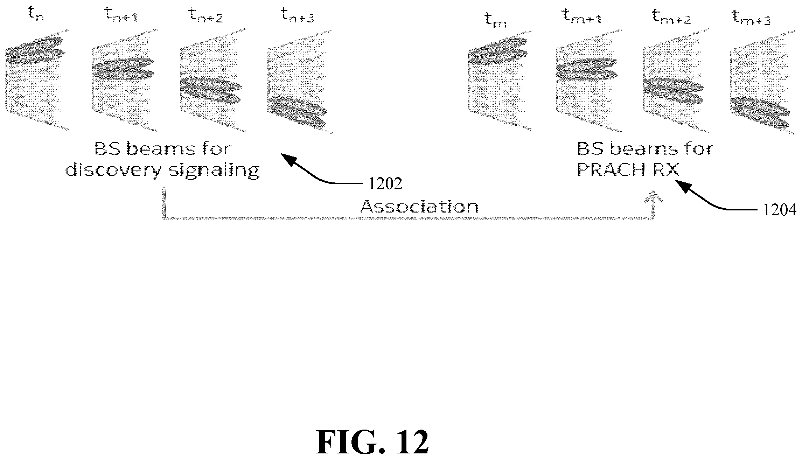

According to R1-165364 (3GPP TSG-RAN WG1#85), 3GPP has proposed to concentrate (or insert) sweeping common control plane functionality into specific subframes, referred to as sweeping subframes. The common control signaling that the 3GPP desires to transmit via the sweeping subframes include a synchronization signal (DL), a reference signal (DL), system information (DL) and random access channel information (UL). Figure 11 illustrates the principle of a sweeping subframe and shows the DL sweeping blocks 1102 and the UL sweeping blocks 1104 transmitted at different times. One of the main use cases of downlink sweeping is downlink discovery signaling, which comprises, for instance, signals for cell search, time and frequency synchronization acquisition, essential system information signaling and cell/beam measurements (e.g. RRM measurements). For UL PRACH (physical random access channel), the 3GPP desires to utilize BS beam reciprocity and enable a UE to transmit PRACH preamble when BS is receiving by beam(s) with high array gain pointed towards the transmitting UE. That means the PRACH resources are associated with BS beams, which are advertised periodically through DL discovery signaling. The DL discovery signaling conveys beam specific reference signals. Figure 12 illustrates the association between BS beams 1202 and PRACH resources 1204.

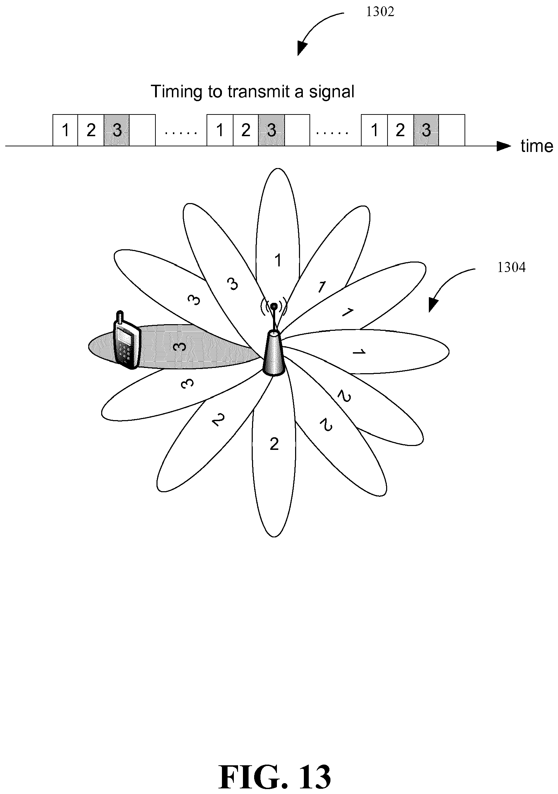

As high gain beams are narrow and the number of concurrent high gain beams that can be formed depend on cost and complexity of the utilized transceiver architecture, beam sweeping for a number of times is needed (e.g. beam sweeping number), in order to cover all possible directions for transmission and/or reception. For example, as illustrated in Figure 13 by way of timing diagram 1302 and beam sweeping illustration 1304, the TRP takes 3 time intervals to cover all directions and 4 beams are generated at each time interval by this TRP. Signaling for transmission and/or reception, which needs to cover the whole cell coverage by beam sweeping, may include synchronization signal(s), reference signal(s), system information, paging, signal to initiate random access procedure, signals of random access procedure (e.g. random access preamble, random access response, contention resolution), signal for DL/LTL scheduling, and/or other signals. For downlink signaling, beam weeping is performed by a TRP for transmission and/or by a UE for reception. For uplink signaling, beam sweeping is performed by a UE for transmission and/or by a TRP for reception.

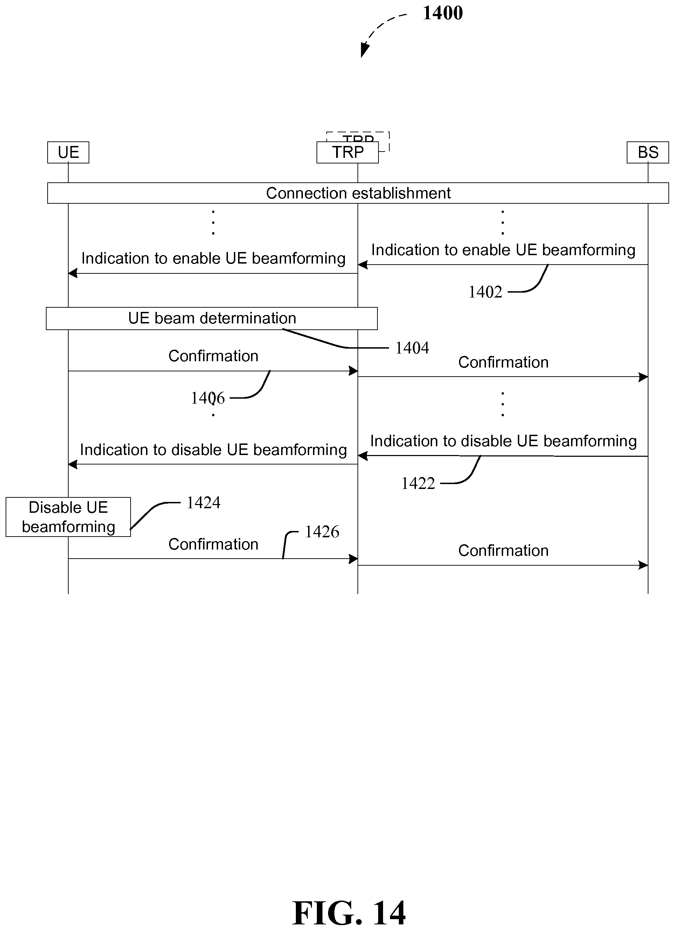

Figure 14 illustrates an example of a flow chart 1400 for enabling/disabling UE beamforming in a connected state. When the UE is in a connected state and the UE supports UE beamforming, the network can control whether UE beamforming is necessary to be enabled or not, e.g. based on radio condition, amount of traffic, or etc. An example case ofUE beamforming enablement/disablement in a connected state would include the following steps, as illustrated in flow diagram 1400:
- Enable UE beamforming:
   Network, e.g. BS and/or TRP, would transmit an indication, e.g. via RRC message, to request the UE to enable UE beamforming for the following/subsequent transmission and reception. Step 1402.
   When the UE receives the indication, the UE determines which UE beam(s) are to be used and use UE beamforming for the following/subsequent transmission and reception. Step 1404. The UE can respond by sending a confirmation by using UE beamforming. Step 1406.
   UE may be able to communicate with multiple TRPs simultaneously after enabling UE beamforming.
- Disable UE beamforming:
   Network, e.g. BS and/or TRP, would transmit an indication to request the UE to disable UE beamforming for the following/subsequent transmission and reception. Step 1422.
   When the UE receives the indication, the UE stops using UE beamforming. Step 1424. The UE can respond by sending a confirmation omnidirectionally or by using UE beamforming, i.e. the UE may stop using UE beamforming before or after transmitting the confirmation. Step 1426.
The network, e.g. BS or TRP, should be able to control whether or not a UE in connected state should use UE beamforming for transmission and/or reception. When the network wants to enable UE beamforming in a connected state, configuration needed for UE to enable UE beamforming is considered/discussed below. UE reaction to enable UE beamforming is also considered below as well as a means to decide/select UE beam(s) after UE beamforming is enabled. The network could provide an indication to the UE, e.g. via a cell or an assisting cell, to enable UE beamforming in the cell. The assisting cell may be a primary cell, an anchor cell, and/or a cell used to handle CP connection of the UE. One or multiple of following pieces of information and/or configuration (or configuration information) could be provided together with the indication to the UE:
- Configuration of UE beam specific UL reference signal, which may be periodic or aperiodic;
- Configuration of network beam specific DL reference signal, which may be periodic or aperiodic;
- Information related to number of UE beam(s) to be generated concurrently. For example, (if the number is less than the maximum number of UE beam(s) that can be generated concurrently,) UE may generate additional UE beam(s), e.g. in addition to the number of UE beam(s) needed to perform beam sweeping periodically, e.g. for measurement;
- Information related to number of UE beam(s) to be generated to cover all possible directions, e.g. antenna elements to be used to generate UE beam(s);
- Information related to whether specific UE beam(s) should be generated to perform beam sweeping periodically, e.g. normal UE beam(s) are generated and directed to serving beam(s) and the specific UE beam(s) are (dedicatedly) generated in order to perform UE beam sweeping periodically (for measurement);
- Information for UE to derive direction(s) in which UE beam(s) should be generated. The information could be related to network beam(s) and/or TRP(s) that UE should generate those UE beam(s) to communicate with. The information may be UE beam specific.
- Configuration related to random access, e.g. dedicated random access preamble, time/frequency resource to transmit preamble, or the like.
- Configuration for UE to derive transmission power to be used by UE beamforming (or UE beam(s)), e.g. an offset value to increase or decrease transmission power;
- Configuration sets corresponding to different network beams or TRPs, which will be applied by the UE when serving or candidate network beam or TRP is changed, e.g. via lower layer signal;
- Configuration to adjust uplink transmission timing;
In response to reception of the indication, one or multiple of following actions could be performed by the UE:
- Since proper UE beam(s) has not been determined yet, UL data and/or signaling (re)transmissions should be suspended or terminated.

The UE can stop using associated configured UL resources, e.g. SPS uplink grant. For suspension, the associated UL HARQ buffer does not need to be flushed. For termination, the associated UL HARQ buffer can be flushed, associated configured UL resources can be discarded, and/or associated HARQ entity and/or MAC entity can be reset.

UL signaling includes scheduling request. UL signaling does not include UL reference signal, signal for random access, and/or signal to be transmitted by beam sweeping.
- Since proper UE beam(s) have not been determined yet, DL data reception should be suspended or terminated.

The UE can stop monitoring associated configured DL resources, e.g. SPS downlink assignment. For suspension, associated DL soft buffer does not need to be flushed. For termination, associated DL soft buffer could be flushed, associated configured DL resources could be discarded, and/or associated HARQ entity and/or MAC entity could be reset.

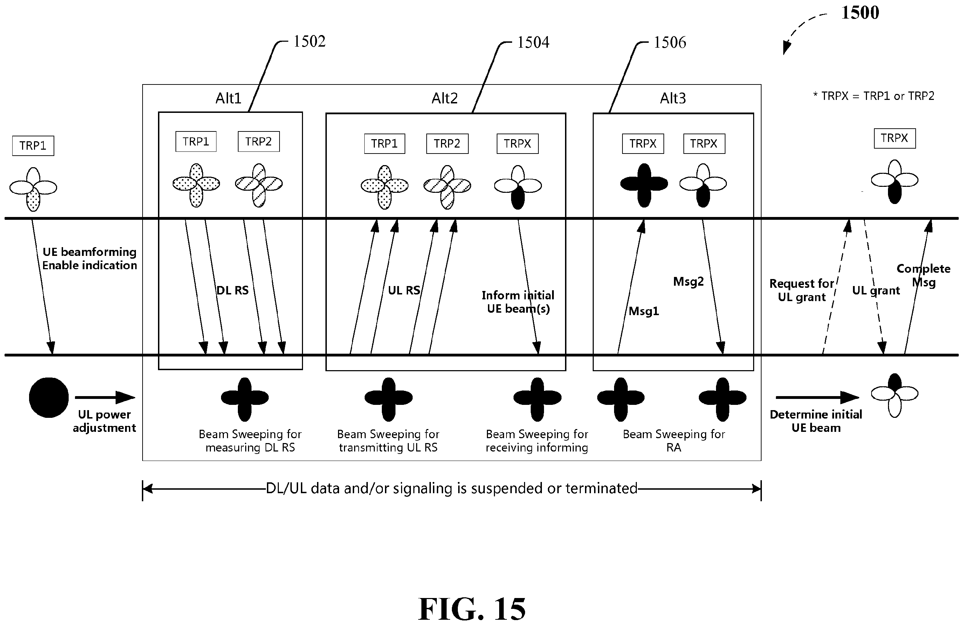

Monitoring or reception of DL signaling, e.g. which is transmitted by network using beam sweeping, may not be suspended or terminated.
- UE should stop any ongoing random access procedure.
- UE should adjust UL transmission power, e.g. to a default value, based on the configuration received together with the indication, or based on estimation by UE itself.
- UE may or may not adjust UL transmission timing, e.g. based on the configuration received together with the indication, or by considering that uplink transmission timing is not synchronous.
- UE could trigger transmission for (aperiodic) UL reference signal, e.g. to be transmitted by UE beam sweeping.
In response to enabling UE beamforming, UE beam(s) for the following transmission and/or reception could be determined by one or multiple of following methods (the methods could be used jointly or separately).
In one method, illustrated in methodology 1500 of Figure 15, UE performs measurement to determine at least one initial UE beam to be used. Alt. 1 1502 of Figure 15 shows an example of this method to enable UE beamforming.
- UE would measure signal, e.g. network beam specific DL reference signal, to determine the UE beam(s), e.g. UE beam(s) with received power larger than a threshold or UE beam with largest received power. Network may transmit the signal by beam sweeping, and the UE may monitor the signal in multiple time intervals to determine which UE beam(s) to be used. Configuration of the signal may be provided together with the indication. The UE may use all possible UE beams to perform measurement or stop measurement once a UE beam is determined.
- UE beam(s) may be selected based on the information for UE to derive direction(s) in which UE beam(s) should be generated. For example, selecting UE beam(s) which is qualified to receive the signal from network beam(s) indicated by the information. Alternatively, UE beam(s) which is qualified to receive signal from network beam(s) which is used to transmit the indication.
- Number of initial UE beam to be determined is one or indicated together with the indication.
- The determined UE beam(s) or mapping between UE beam(s) and network beam(s) may be indicated to network, e.g. in a confirmation or complete message for enabling UE beamforming.

In another method, also illustrated in methodology 1500 of Figure 15, network performs measurement and informs the UE about at least one initial UE beam to be used. Alt. 2 1504 of Figure 15 shows an example of this method to enable UE beamforming.
- Network would measure signal, e.g. UE beam specific UL reference signal or scheduling request, to determine the UE beam(s) to be used. UE transmits the signal by UE beam sweeping. And network would provide a signaling to the UE to let UE be aware of (candidate(s) of) initial UE beam(s).
- The signaling may provide information for UE to adjust UL transmission power, e.g. an offset value to increase or decrease transmission power.
- The signaling may be transmitted repeatedly, e.g. by beam sweeping, to ensure successful reception by the UE. UL grant may be provided together with the signaling, e.g. to let UE transmit a confirmation or complete message for enabling UE beamforming.
- The signaling may provide information for UE to adjust UL transmission timing, e.g. timing advance.
In another method, also illustrated in methodology 1500 of Figure 15, UE initiates a random access procedure. Alt. 3 1506 of Figure 15 shows an example of this method to enable UE beamforming.
- Initial UE beam(s) could be determined during the random access procedure, e.g. the UE beam(s) which are used to transmit or receive signal of the random access procedure or the UE beam(s) which are assigned during the random access procedure, e.g. via Msg2.
- UL transmission power and/or UL transmission timing could also be determined during the random access procedure.
- The indication may be carried by a message used to initiate a handover procedure, e.g. intra-cell handover, inter-cell handover, inter-RAT handover, or a message used to add or modify a serving cell. For example, enabling UE beamforming may (only) be accompanied with handover or serving cell addition.
- The UE initiates the random access procedure to access a TRP. The TRP could be the one that transmits the indication, is indicated together with the indication, is selected based on UE measurement, or is the transmitter of a Msg2 received by the UE.

Suspension or termination of a transmission could be resumed when the UE beam(s) are determined, the signaling to let UE be aware of (candidate(s) of) initial UE beam(s) is received, the random access procedure is successfully completed, a confirmation or complete message for enabling UE beamforming is transmitted by the UE (successfully), or an UL grant is received. Measured results (e.g. beam specific measured results, TRP specific measured result, or etc.) or an aperiodic measurement report may be carried by or transmitted together with the confirmation or complete message for enabling UE beamforming. Associated power headroom report may need to be triggered and/or reported, e.g. in response to enabling UE beamforming, determination of initial UE beam(s), and/or receiving signaling to let UE be aware of (candidate(s) of) initial UE beam(s).

Regarding disabling UE beamforming in a connected state, a network, e.g. BS or TRP, should be able to control whether a UE in connected state should stop using UE beamforming for transmission and/or reception. When the network wants to disable UE beamforming, configuration needed for UE to disable UE beamforming is considered/discussed below. UE reaction to disable UE beamforming is also considered below. A network could provide an indication to the UE, e.g. via a cell or an assisting cell, to disable UE beamforming in the cell. The assisting cell may be a primary cell, an anchor cell, and/or a cell used to handle CP connection of the UE. One or multiple of the following pieces of information and/or configuration (or configuration information) could be provided together with the indication to the UE:
- Configuration of non-UE beam specific UL reference signal, e.g. cell specific UL reference signal, UE specific UL reference signal, which may be periodic or aperiodic;
- Configuration of network beam specific DL reference signal, which may be periodic or aperiodic;
- Configuration related to random access, e.g. dedicated random access preamble, time/frequency resource to transmit preamble, or etc.
- Configuration for UE to derive transmission power to be used by the UE without using UE beamforming (or UE beam(s)), e.g. an offset value to increase or decrease transmission power;
- Configuration sets corresponding to different network beams or TRPs, which will be applied by the UE when serving or candidate network beam or TRP is changed, e.g. via lower layer signal;
- Configuration to adjust uplink transmission timing, e.g. timing advance;
- Configuration related to scheduling request, e.g. periodicity, radio resource.

In response to reception of the indication, one or multiple of the following actions could be performed by the UE:
- UL data and/or signaling (re)transmissions should be suspended or terminated, e.g. due to possible interference caused by incorrect transmission power.
   The UE could stop using associated configured UL resources, e.g. SPS uplink grant. For suspension, associated UL HARQ buffer does not need to be flushed. For termination, associated UL HARQ buffer could be flushed, associated configured UL resources could be discarded, and/or associated HARQ entity and/or MAC entity could be reset.
   UL signaling includes scheduling request and/or signal to be transmitted by beam sweeping. UL signaling does not include UL reference signal and/or signal for random access.
   For example, the UE may terminate but not suspend UL data and/or signaling (re)transmissions due to disabling UE beamforming.
- DL data reception should be suspended or terminated, e.g. due to resource scheduling of the network.
   The UE could stop monitoring associated configured DL resources, e.g. SPS downlink assignment. For suspension, associated DL soft buffer does not need to be flushed. For termination, associated DL soft buffer could be flushed, associated configured DL resources could be discarded, and/or associated HARQ entity and/or MAC entity could be reset.
   Monitoring or reception of DL signaling, e.g. which is transmitted by network using beam sweeping, may not be suspended or terminated.
   For example, the UE may terminate or suspend UL (re)transmissions but not DL (re)transmissions due to disabling UE beamforming.
- UE should stop any ongoing random access procedure.
- UE should adjust UL transmission power, e.g. to a default value, based on the configuration received together with the indication, or based on estimation by UE itself.
- UE may or may not adjust UL transmission timing, e.g. based on the configuration received together with the indication, or by considering/determining that uplink transmission timing is not synchronous.
- UE could trigger transmission for (aperiodic) UL reference signal.

In response to disabling UE beamforming, candidate network beam(s) and/or serving TRP(s) may be different before and after disabling UE beamforming, e.g. due to UL transmission power change, UE beamforming gain change. Methods to adjust UL transmission power, serving TRP, and/or candidate network beam(s) for the following transmission and/or reception are considered/discussed below (the methods could be used jointly or separately).

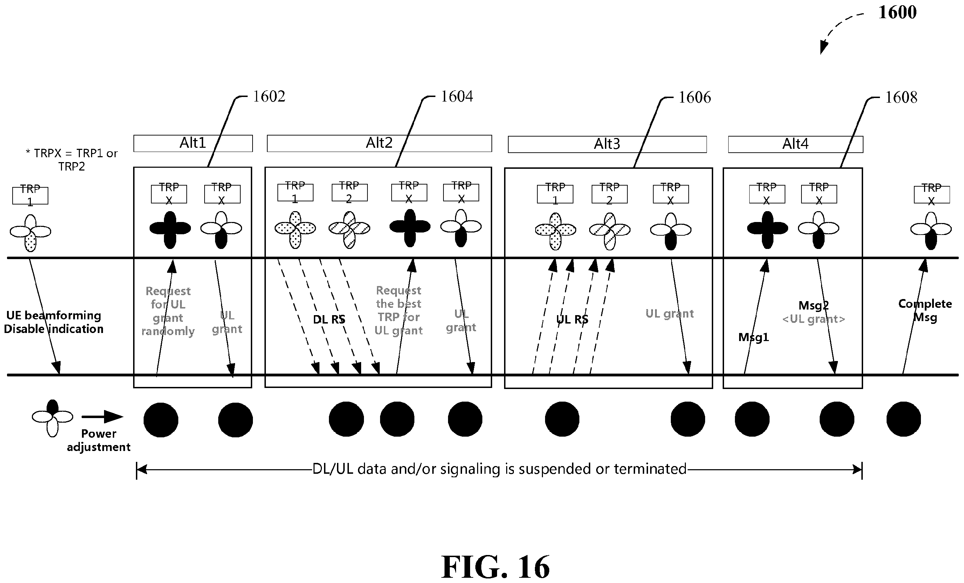

In one method, illustrated in methodology 1600 of Figure 16, UE performs measurement to determine candidate network beam(s) and/or serving TRP(s). Alt. 2 1604 of Figure 16 shows an example of this method to disable UE beamforming.
- UE would measure signal, e.g. network beam specific DL reference signal, to determine candidate network beam(s) and/or serving TRP(s), e.g. network beam(s) and/or TRP(s) with received power larger than a threshold or with largest received power. Network may transmit the signal by beam sweeping, and the UE may monitor the signal in multiple time intervals. Configuration of the signal may be provided together with the indication.
- The determined candidate network beam(s) and/or serving TRP(s) may be indicated to network, e.g. in a confirmation or complete message for disabling UE beamforming.

In another method, network performs measurement and informs the UE about candidate network beam(s) and/or serving TRP(s) to be used. Alt. 1 1602 and alt. 3 1606 of Figure 16 show examples of this method to disable UE beamforming.
- Network would measure signal, e.g. UL reference signal or scheduling request, to determine candidate network beam(s) and/or serving TRP(s) to be used. Alt. 1 1602 shows the case of scheduling request and alt. 3 1606 shows the case of UL reference signal. UE transmits the signal based on network configuration. And network would provide signaling to the UE to let UE be aware of candidate network beam(s) and/or serving TRP(s).
- The signaling may provide information for UE to adjust UL transmission power, e.g. an offset value to increase or decrease transmission power.
- The signaling may be transmitted repeatedly, e.g. by beam sweeping, to ensure successful reception by the UE. UL grant may be provided together with the signaling, e.g. to let UE transmit a confirmation or complete message for disabling UE beamforming.
- The signaling may provide information for UE to adjust UL transmission timing, e.g. timing advance.

In another method, UE initiates a random access procedure. Alt. 4 1608 of Figure 16 shows an example of this method to disable UE beamforming.
- Candidate network beam(s) and/or serving TRP(s) could be determined during the random access procedure, e.g. the network beam(s) and/or TRP(s) which is used to transmit or receive signal of the random access procedure or the network beam(s) and/or TRP(s) which is assigned during the random access procedure, e.g. via Msg2.
- UL transmission power and/or UL transmission timing could also be determined during the random access procedure.
- The indication may be carried by a message used to initiate a handover procedure, e.g. intra-cell handover, inter-cell handover, inter-RAT handover, or a message used to add or modify a serving cell. For example, disabling UE beamforming may (only) be accompanied with handover or serving cell addition.
- The UE initiates the random access procedure to access a TRP. The TRP could be the one transmits the indication, indicated together with the indication, selected based on UE measurement, or the transmitter of a Msg2 received by the UE. The TRP could be the serving TRP after disabling UE beamforming.

After determining candidate network beam(s) and/or serving TRP(s), e.g. via the methods described above, the UE could indicate the determined network beam(s) and/or TRP(s) to the network explicitly or implicitly. For example, if the UE is configured with different radio resources for scheduling request corresponding to different network beam(s) and/or TRP(s), the UE could select the resource corresponding to the determined network beam(s) and/or TRP(s) to transmit a scheduling request. The UE could also ignore the resource not corresponding to the determined network beam(s) and/or TRP(s) when the UE would like to transmit a scheduling request. Another example is that the UE provides information about the determined network beam(s) and/or TRP(s) in a UL message, e.g. a response, confirmation, or complete message of disabling UE beamforming.

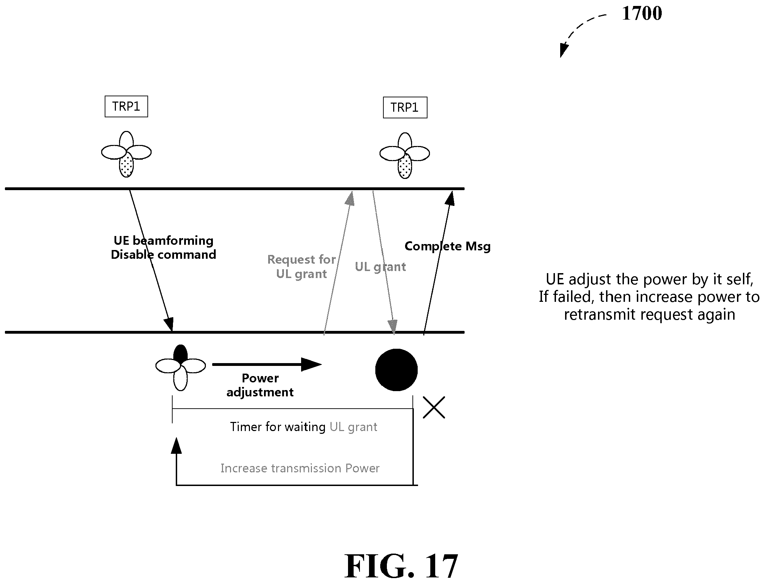

In response to disabling UE beamforming, power ramping may be applied to transmission of a scheduling request in order to adjust UL transmission power. The UE may start transmitting a scheduling request with a default transmission power, or transmission power used before disabling UE beamforming. Next transmission of a scheduling request, e.g. when the UE fails to receive a UL grant, may use transmission power one step higher compared to the previous one. Transmission power of the following data and/or signaling transmission after disabling UE beamforming may be based on the transmission power of the scheduling request that has a corresponding UL grant received. Figure 17 shows an example methodology 1700 for adjusting UL transmission power of a scheduling request.

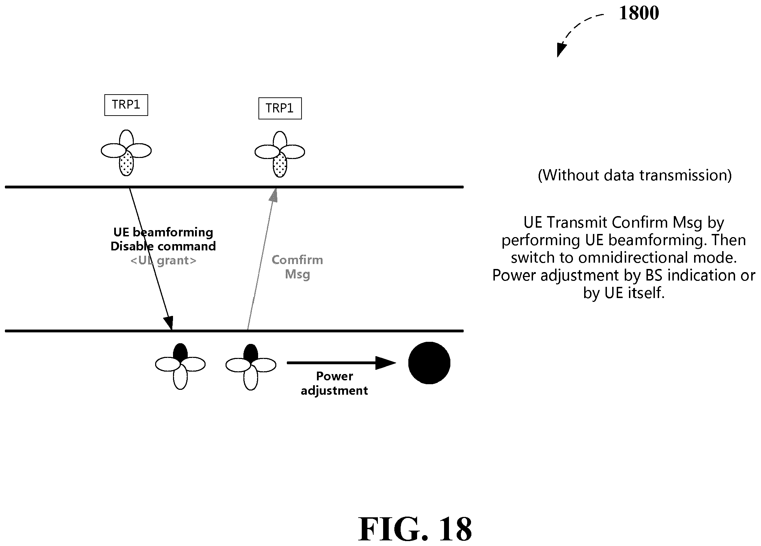

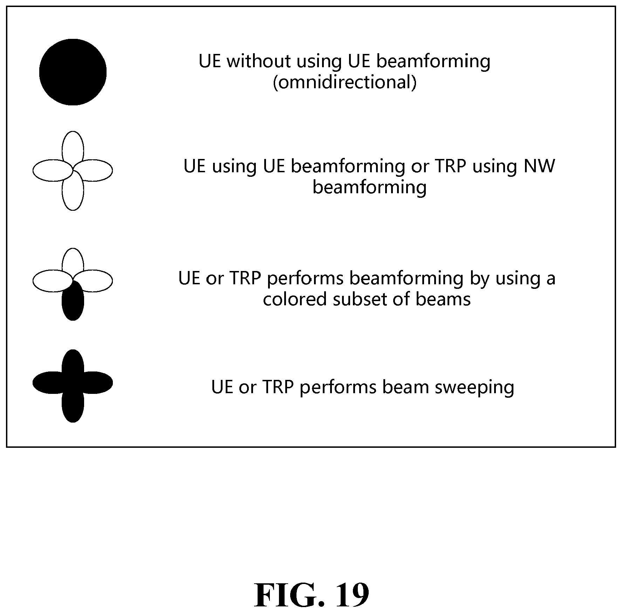

In response to reception of an indication to disable UE beamforming, the UE may transmit a confirmation or complete message to network. Transmission of the confirmation or complete message may be performed before or after UE beamforming is disabled. That is, the UE may transmit the confirmation or complete message using UE beamforming or omnidirectionally. It is possible that network transmits the indication to the UE after all currently ongoing transmissions are finished. Figure 18 shows an example methodology 1800 for transmission of a confirmation or complete message. Suspension or termination of a transmission could be resumed when the candidate network beam(s) and/or serving TRP(s) are determined, the signaling to let UE be aware of candidate network beam(s) and/or serving TRP(s) is received, the random access procedure is successfully completed, a confirmation or complete message for disabling UE beamforming is transmitted by the UE (successfully), or an UL grant is received. Measured results (e.g. network beam specific measured results, TRP specific measured result, or the like) or an aperiodic measurement report may be carried by or transmitted together with the confirmation or complete message for disabling UE beamforming. Associated power headroom report may need to be triggered and/or reported, e.g. in response to disabling UE beamforming, determination of candidate network beam(s) and/or serving TRP(s), and/or receiving signaling to let UE be aware of candidate network beam(s) and/or serving TRP(s).
To explicitly indicate a beam, per beam specific configuration, e.g. index, resource for the beam, or precoding matrix, could be used to differentiate beams. Figure 19 shows the meanings of icons presented in Figure 15, 16, 17 and 18.

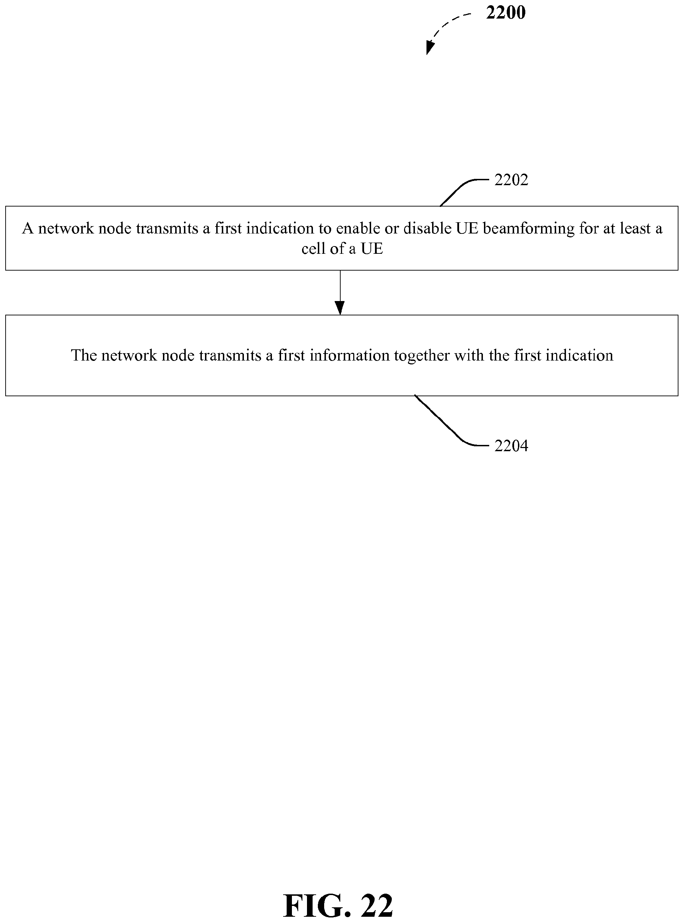

Figure 22 illustrates an example methodology for a network mode. As illustrated in the flow diagram 2200, the network node transmits a first indication to a UE to enable or disable UE beamforming, for at least a cell of the UE (Step 2202). The first indication can be used to initiate a random access procedure. The methodology could further comprise that the network node transmits a first information together with the first indication (Step 2204). The first information could include at least a configuration (or configuration information) related to random access. The first indication and the first information could be provided by the same RRC message.

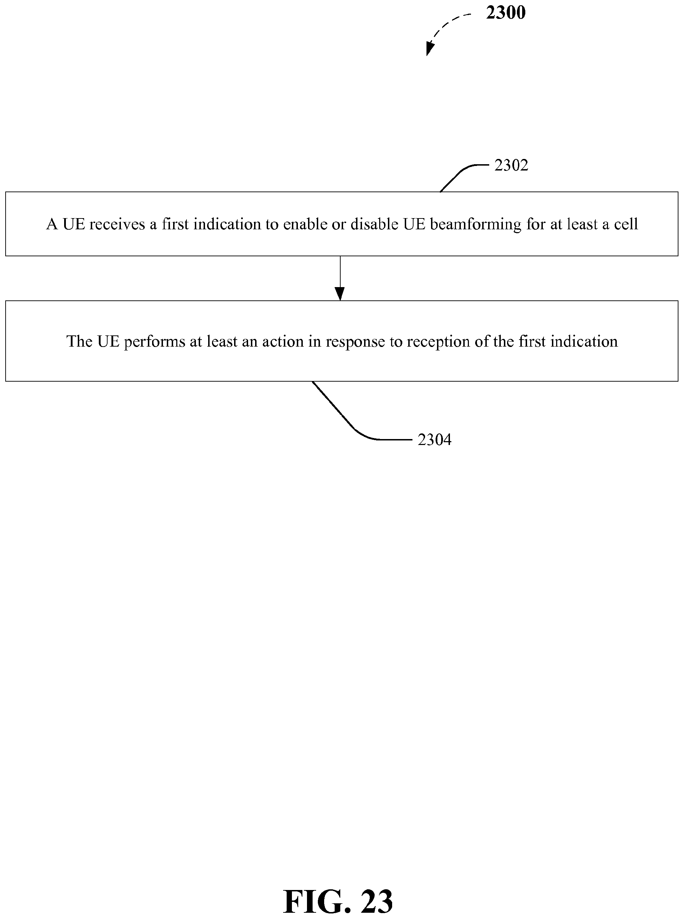

Figure 23 illustrates an example methodology for a UE. As illustrated in the flow diagram 2300, the UE receives a first indication to enable or disable UE beamforming for at least one cell (Step 2302). At Step 2304, the UE performs at least one action in response to the reception of the first indication. The action can include initiating a random access procedure in response to reception of the first indication. In a non-limiting example, the UE enables UE beamforming, in response to reception of the first indication, to perform the random access procedure. In a non-limiting example, the UE receives a first information together with the first indication. In a non-limiting example, the first information is at least a configuration related to random access. In a non-limiting example, the first indication and the first information are provided by the same RRC message. In a non-limiting example, the UE triggers an associated power headroom report in response to the first indication.

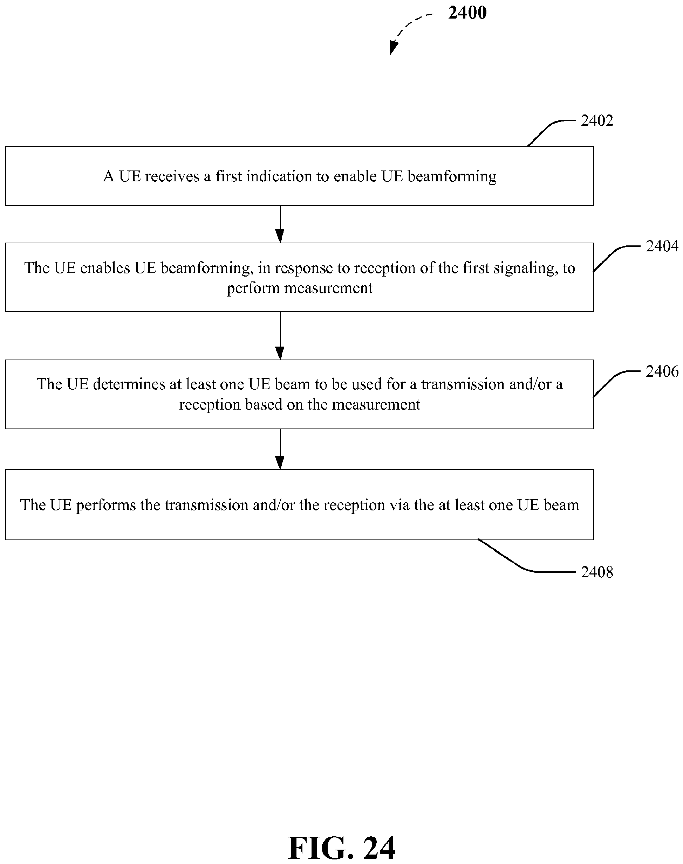

Figure 24 illustrates an example methodology for a UE. As illustrated in flow diagram 2400, the UE receives a first indication to enable UE beamforming (Step 2402). At Step 2404, the UE enables UE beamforming, in response to reception of the first indication/signaling, to perform measurement. At Step 2406, the UE determines/selects at least one UE beam to be used for a transmission and/or a reception based on the measurement. At Step 2408, the UE performs the transmission and/or the reception via the at least one UE beam.

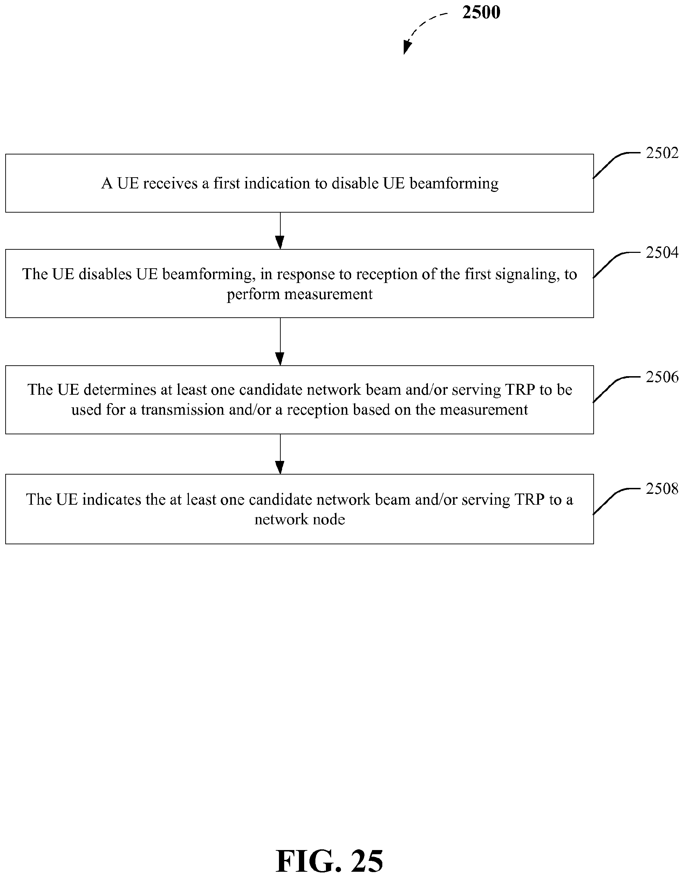

Figure 25 illustrates an example methodology for a UE. As illustrated in flow diagram 2500, the UE receives a first indication to disable UE beamforming (Step 2502). At Step 2504, the UE disables UE beamforming, in response to reception of the first indication, to perform measurement. At Step 2506, the UE determines/selects at least one candidate network beam and/or serving TRP to be used for a transmission and/or a reception based on the measurement. At Step 2508, the UE indicates the at least one candidate network beam and/or serving TRP to a network node. In a non-limiting example, the UE indicates the at least one candidate network beam and/or serving TRP by selecting radio resource of scheduling request corresponding to the at least one candidate network beam and/or serving TRP. In a non-limiting example, the UE indicates the at least one candidate network beam and/or serving TRP by informing/providing information about at least one candidate network beam and/or serving TRP to the network node.

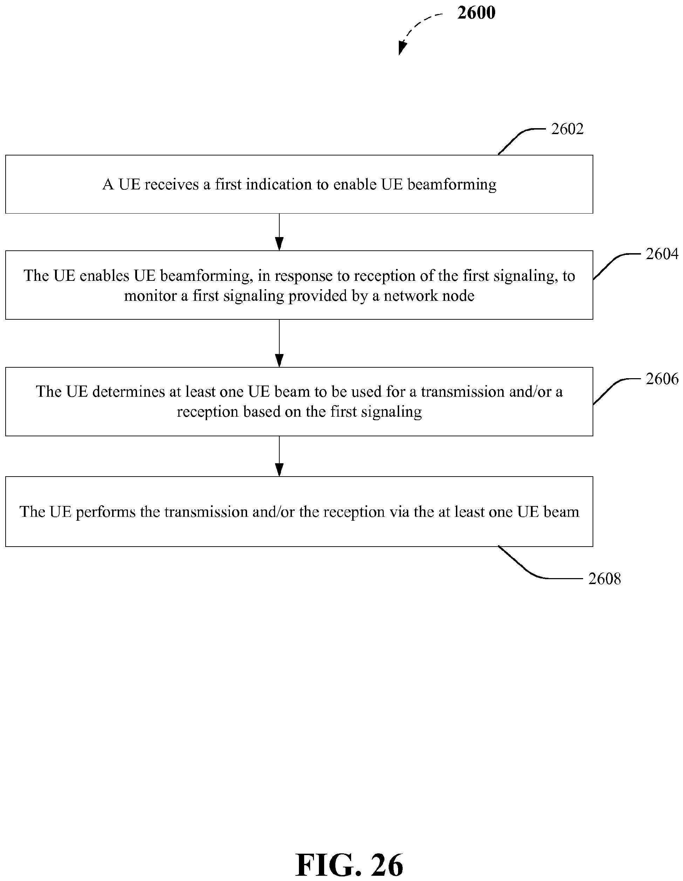

Figure 26 illustrates an example methodology for a UE. As illustrated in flow diagram 2600, the UE receives a first indication to enable UE beamforming (Step 2602). At Step 2604, the UE enables UE beamforming, in response to reception of the first indication, to monitor a first signaling provided by a network node. At Step 2606, the UE determines at least one UE beam to be used for a transmission and/or a reception based on the first signaling. At Step 2608, the UE performs the transmission and/or the reception via the at least one UE beam.

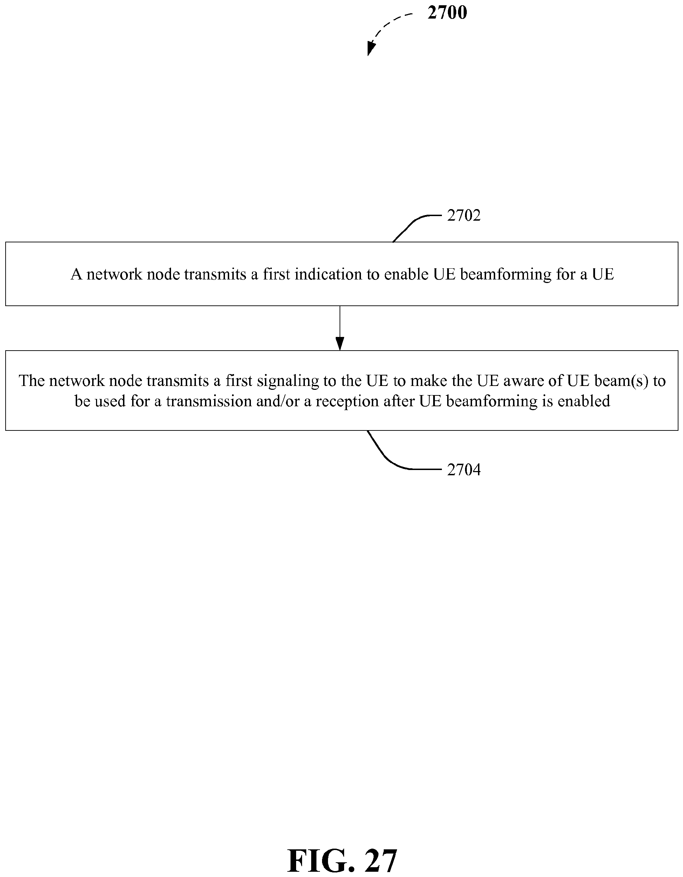

Figure 27 illustrates an example methodology for a network node. As illustrated in the flow diagram 2700, the network node transmits a first indication to enable UE beamforming for a UE (Step 2702). At Step 2704, the network node transmits a first signaling to the UE to make the UE aware of UE beam(s) to be used for a transmission and/or a reception after UE beamforming is enabled.

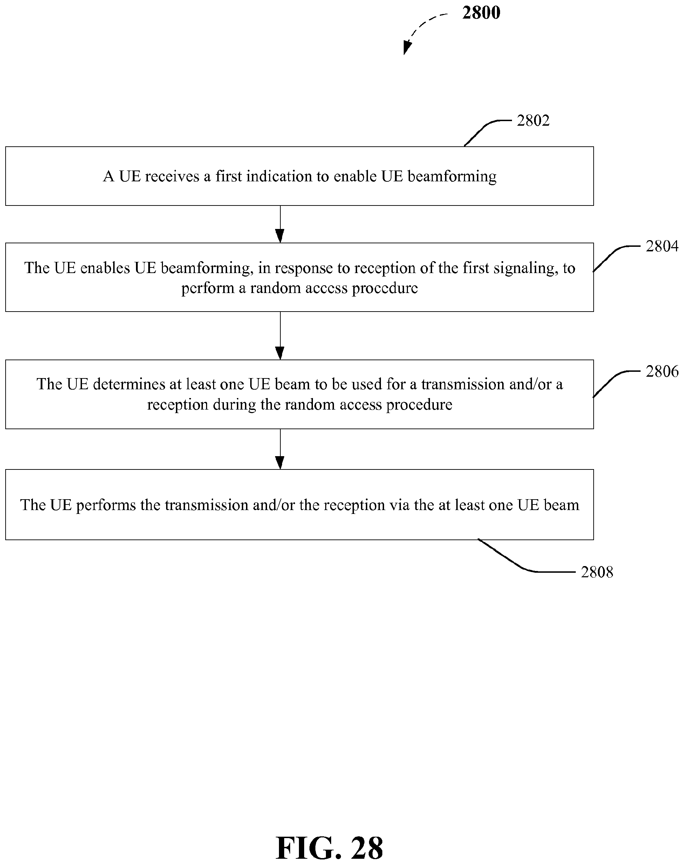

Figure 28 illustrates an example methodology for a UE. As illustrated in the flow diagram 2800, the UE receives a first indication to enable UE beamforming (Step 2802). At Step 2804, the UE enables UE beamforming, in response to reception of the first indication, to perform a random access procedure. At Step 2806, the UE determined at least one UE beam to be used for a transmission and/or a reception during the random access procedure. At Step 2808, the UE performs the transmission and/or the reception via the at least one UE beam.

In various non-limiting examples, the methodologies described above with references to figures 22, 23, 24, 25, 26, 27 and/or 28 can be further clarified, supplemented, complimented, enhanced or modified with one or more functions, features and properties associated with the UE and the network node or components thereof, as described in the paragraphs below.

The first indication to enable or disable UE beamforming in the cell is transmitted or received via the cell or an assisting cell of the UE. The assisting cell is a primary cell, an anchor cell, and/or a cell used to handle control plane connection of the UE.
The first information is at least a configuration of UE beam specific UL reference signal. The UE beam specific UL reference signal is periodic. Alternatively, the UE beam specific UL reference signal is aperiodic. The first information is at least a configuration of non-UE beam specific UL reference signal, e.g. cell specific UL reference signal or UE specific UL reference signal. The non-UE beam specific UL reference signal is periodic. Alternatively, the non-UE beam specific UL reference signal is aperiodic. The first information is at least a configuration of network beam specific DL reference signal. The network beam specific DL reference signal is periodic. Alternatively, the network beam specific DL reference signal is aperiodic.
The first information is at least information related to number of UE beam(s) to be generated concurrently. The first information is at least information related to number of UE beam(s) to be generated to cover all possible directions. The first information is at least information used to derive direction(s) for UE beam(s) to be generated by the UE. The first information is at least information related to network beam(s) that UE beam(s) to be generated would communicate with. The first information is at least information related to TRP(s) that UE beam(s) to be generated would communicate with.

The first information or the information is UE beam specific.
The first information is at least a configuration related to random access. The configuration related to random access could be a dedicated random access preamble. The configuration related to random access includes time/frequency resource(s) for preamble transmission.
The first information is at least a configuration to derive transmission power to be used by UE beamforming or UE beam(s), e.g. an offset value to increase or decrease transmission power. The first information is at least a configuration to derive transmission power to be used by the UE without using UE beamforming, e.g. an offset value to increase or decrease transmission power.
The first information includes at least configuration sets corresponding to different network beams, which will be applied by the UE when serving or candidate network beam is changed, e.g. via lower layer signal. The first information includes at least configuration sets corresponding to different TRPs, which will be applied by the UE when serving or candidate TRP is changed, e.g. via lower layer signal.
The first information includes at least configuration to adjust uplink transmission timing, e.g. timing advance. The first information includes at least configuration related to scheduling request, e.g. periodicity, radio resource.

The UE performs at least an action in response to reception of the first indication. The action includes starting using UE beamforming. Alternatively, the action includes stopping using UE beamforming. The action includes suspending UL data and/or UL signaling (re)transmissions. The UE doesn't flush associated UL HARQ buffer. The action includes terminating UL data and/or UL signaling (re)transmissions. The action includes flushing associated UL HARQ buffer. The action includes discarding associated configured UL resources, e.g. SPS uplink grant. The action includes stopping using associated configured UL resources, e.g. SPS uplink grant. The UL signaling includes a scheduling request. The UL signaling doesn't include a UL reference signal. The UL signaling doesn't include a signal for random access. The UL signaling doesn't include a signal to be transmitted by beam sweeping. The action includes suspending DL data reception. The UE doesn't flush associated DL soft buffer. The action includes terminating DL data reception. The action includes flushing associated DL soft buffer. The action includes discarding associated configured DL resources, e.g. SPS downlink assignment. The action includes resetting associated HARQ entity. The action includes resetting associated MAC entity.

The action includes stopping monitoring associated configured DL resources, e.g. SPS downlink assignment. The UE doesn't suspend or terminate monitoring or reception of DL signaling. The UE doesn't suspend or terminate monitoring or reception of DL data. The DL signaling is transmitted by network using beam sweeping. The action includes stopping any ongoing random access procedure. The action includes adjusting UL transmission power. The UL transmission power is adjusted to a default value. The UL transmission power is adjusted based on the first information. The UL transmission power is adjusted based on UE estimation. The action includes adjusting UL transmission timing. The UL transmission timing is adjusted based on at least the first information. The UL transmission timing is adjusted by considering uplink transmission timing is not synchronous. The action includes triggering a transmission for (aperiodic) UL reference signal. The transmission is transmitted by UE beam sweeping.

The UE determines the at least one UE beam by measuring a network beam specific DL reference signal. The UE determines the at least one candidate network beam and/or serving TRP by measuring a network beam specific DL reference signal. The network beam specific DL reference signal is transmitted by beam sweeping. The UE monitors the network beam specific DL reference signal in multiple time intervals. The UE determines the at least one UE beam by selecting UE beam(s) with received power larger than a threshold. The UE determines the at least one candidate network beam and/or serving TRP by selecting network beam(s) and/or TRP(s) with received power larger than a threshold. The UE determines the at least one UE beam by selecting a UE beam with largest received power. The UE determines the at least one candidate network beam and/or serving TRP by selecting a network beam and/or TRP with largest received power. The UE uses all possible UE beams to perform the measurement. The UE stops the measurement once a UE beam is determined. The UE determines the at least one UE beam based on the first information, e.g. information used to derive direction(s) in which UE beam(s) to be generated. The UE determines the at least one UE beam by selecting UE beam(s) which is qualified to receive a signal, e.g. DL reference signal, from network beam(s) indicated by the first information. The UE determines the at least one UE beam by selecting UE beam(s) which is qualified to receive a signal, e.g. DL reference signal, from network beam(s) which is used to transmit the first indication. The number of UE beam(s) to be determined is one. The number of UE beam(s) to be determined is indicated by or derived from the first indication or the first information.

The UE transmits a confirmation or complete message in response to the first indication. The information about the at least one UE beam is indicated to network, e.g. in the confirmation or complete message. The information about mapping between the at least one UE beam and network beam(s) is indicated to network, e.g. in the confirmation or complete message. The information about the at least one candidate network beam and/or serving TRP is indicated to network, e.g. in the confirmation or complete message.

The first signaling lets the UE aware of candidate UE beam(s) to be used for the transmission and/or the reception. The first signaling lets the UE aware of candidate network beam(s) and/or serving TRP(s) to be used for the transmission and/or the reception. The first signaling provides information for the UE to adjust UL transmission power, e.g. an offset value to increase or decrease transmission power. The first signaling is transmitted repeatedly. The first signaling is transmitted by beam sweeping. The first signaling provides information for the UE to adjust UL transmission timing, e.g. timing advance. An uplink grant is provided together with the first signaling.

The random access procedure is initiated in response to reception of the first indication. The UE determines the at least one UE beam based on the random access procedure. The UE determines the at least one UE beam by selecting UE beam(s) which is used to transmit or receive a signal, e.g. random access preamble (or Msg1) or random access response (or Msg2), of the random access procedure. The UE determines the at least one UE beam by selecting UE beam(s) assigned during the random access procedure, e.g. via random access response or Msg2. The UE determines the at least one candidate network beam and/or serving TRP based on the random access procedure. The UE determines the at least one candidate network beam and/or serving TRP by selecting network beam(s) and/or TRP(s) which is used to transmit or receive a signal, e.g. random access preamble (or Msg1) or random access response (or Msg2), of the random access procedure. The UE determines the at least one candidate network beam and/or serving TRP by selecting network beam(s) and/or TRP(s) assigned during the random access procedure, e.g. via random access response or Msg2. The UE determines UL transmission power during the random access procedure. The UE determines UL transmission timing during the random access procedure.

The first indication is provided by a message to initiate a handover procedure, e.g. intra-cell handover, inter-cell handover, inter-RAT handover. The first indication is provided by a message to add or modify a serving cell. The first indication is provided by a message not used to initiate a handover procedure. The first indication is provided by a message not used to add or modify a serving cell. The first indication is not provided by a message other than handover or a message to add/modify a serving cell.
The UE initiates the random access procedure to access a TRP. The TRP is the network node which transmits the first indication. The TRP is indicated together with the first indication. The TRP is selected based on measurement performed by the UE. The TRP is the transmitter of a random access response (or Msg2) received by the UE.
The UE resumes UL data/signaling transmission and/or DL data reception (from suspending or terminating) when the UE determines the at least one UE beam. The UE resumes UL data/signaling transmission and/or DL data reception (from suspending or terminating) when the UE determines the at least one candidate network beam and/or serving TRP. The UE resumes UL data/signaling transmission and/or DL data reception (from suspending or terminating) when the UE receives the first signaling. The UE resumes UL data/signaling transmission and/or DL data reception (from suspending or terminating) when the random access procedure is successfully completed. The UE resumes UL data/signaling transmission and/or DL data reception (from suspending or terminating) when the confirmation or complete message is transmitted by the UE (successfully). The UE resumes UL data/signaling transmission and/or DL data reception (from suspending or terminating) when the UL grant is received.

A measured result or a measurement report is carried by or transmitted together with the confirmation or complete message. The measured result or the measurement report includes one or multiple beam specific measured result(s). The measured result or the measurement report includes one or more TRP specific measured result(s). The measurement report is aperiodic.
The UE triggers an associated power headroom report in response to enabling UE beamforming. The UE triggers an associated power headroom report in response to disabling UE beamforming. The UE triggers an associated power headroom report in response to the first indication. The UE triggers an associated power headroom report in response to determination of UE beam(s). The UE triggers an associated power headroom report in response to determination of candidate network beam(s) and/or serving TRP(s). The UE triggers an associated power headroom report in response to receiving the first signaling.
The first indication is provided by a RRC message, e.g. a connection reconfiguration message. The first indication and the first information are provided by the same RRC message, e.g. a connection reconfiguration message. Alternatively, the first indication is provided by a MAC signaling. Alternatively, the first indication is provided by a PHY signaling.

The transmission and/or the reception is UE specific. The transmission and/or the reception is data transmission and/or reception. The transmission and/or the reception is signaling transmission and/or reception. The transmission and/or the reception is via a data channel, e.g. PDSCH or PUSCH. The transmission and/or the reception is via a control channel, e.g. PDCCH or PUCCH. The transmission is a scheduling request. The scheduling request is transmitted using power ramping, e.g. next transmission uses one step higher transmission power. The transmission is the confirmation or complete message. The confirmation or complete message is transmitted using UE beamforming. Alternatively, the confirmation or complete message is transmitted omnidirectionally.
The UE is capable of UE beamforming. The UE is in connected mode (or connected state). The UE provides UE capability about UE beamforming to network before reception of the first indication. The network is a network node. The network node is a TRP. The network node is a base station. The network node is a 5G node. The UL data is SPS. The DL data is SPS. The transmission is transmitted omnidirectionally. The UE is configured with radio resources of scheduling request corresponding to different network beams and/or TRPs. The UE doesn't change a serving cell due to reception of the first indication. The UE doesn't change a serving cell before and after enabling (or disabling) UE beamforming. The serving cell is the primary cell of the UE. Per beam specific configuration, e.g. index, resource for a beam, or precoding matrix, is used to differentiate beams.

According to a non-limiting example of the subject disclosure, a UE comprises a control circuit, a processor installed in the control circuit, a memory installed in the control circuit and coupled to the processor, wherein the processor is configured to execute a program code stored in the memory to perform the method steps as defined in anyone of the preceding embodiments. According to a non-limiting example of the subject disclosure, a network node comprises a control circuit, a processor installed in the control circuit, a memory installed in the control circuit and coupled to the processor, wherein the processor is configured to execute a program code stored in the memory to perform the method steps as defined in anyone of the preceding embodiments.

Various embodiments of the subject disclosure described herein can be applied to or implemented in exemplary wireless communication systems and devices described below. In addition, various embodiments of the subject disclosure are described mainly in the context of the 3GPP architecture reference model. However, it is understood that with the disclosed information, one skilled in the art could easily adapt for use and implement aspects of the subject disclosure in a 3GPP2 network architecture as well as in other network architectures, as further described herein.
The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A (Long Term Evolution Advanced) wireless access, 3GPP2 UMB (Ultra Mobile Broadband), WiMax, 3GPP NR (New Radio) wireless access for 5G, or some other modulation techniques.

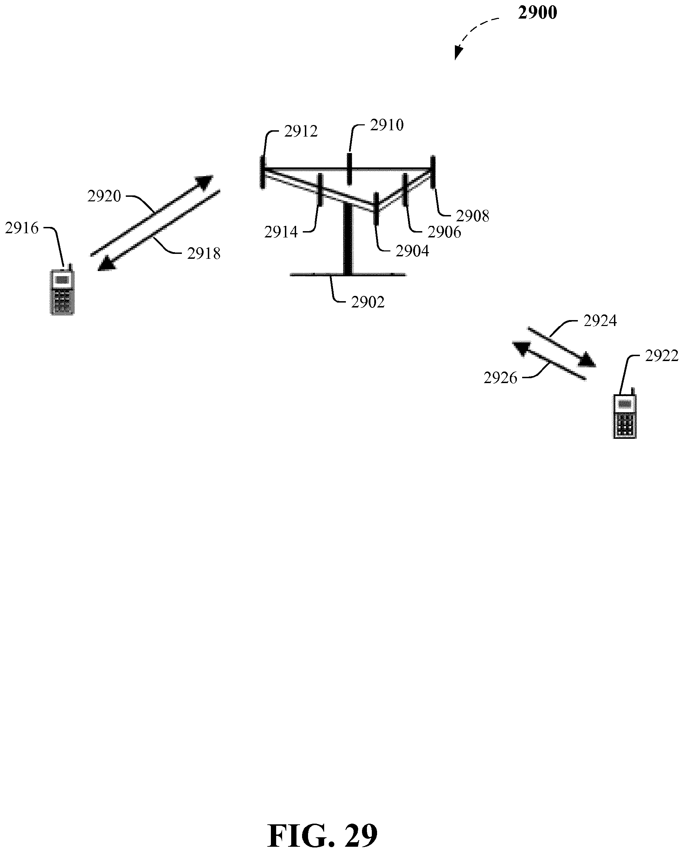

FIG. 29 is a block diagram representing an exemplary non-limiting multiple access wireless communication system 2900 in which various embodiments described herein can be implemented. An access network 2902 (AN) includes multiple antenna groups, one group including antennas 2904 and 2906, another group including antennas 2908 and 2910, and an additional group including antennas 2912 and 2914. In FIG. 29, only two antennas are shown for each antenna group, however, more or fewer antennas may be utilized for each antenna group. Access terminal 2916 (AT) is in communication with antennas 2912 and 2914, where antennas 2912 and 2914 transmit information to access terminal 2916 over forward link 2918 and receive information from access terminal 2916 over reverse link 2920. Access terminal (AT) 2922 is in communication with antennas 2906 and 2908, where antennas 2906 and 2908 transmit information to access terminal (AT) 2922 over forward link 2924 and receive information from access terminal (AT) 2922 over reverse link 2926. In a Frequency Division Duplex (FDD) system, communication links 2918, 2920, 2924 and 2926 may use different frequency for communication. For example, forward link 2918 may use a different frequency than that used by reverse link 2920.

Each group of antennas and/or the area in which they are designed to communicate is often referred to as a sector of the access network. In non-limiting aspects, antenna groups each can be designed to communicate to access terminals in a sector of the areas covered by access network 2902.

In communication over forward links 2918 and 2924, the transmitting antennas of access network 2902 may utilize beamforming in order to improve the signal-to-noise ratio of forward links for the different access terminals 2916 and 2922. Also, an access network using beamforming to transmit to access terminals scattered randomly through its coverage normally causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), UE device, a communication device, a wireless communication device, a mobile device, a mobile communication device, a terminal, an access terminal or some other terminology.

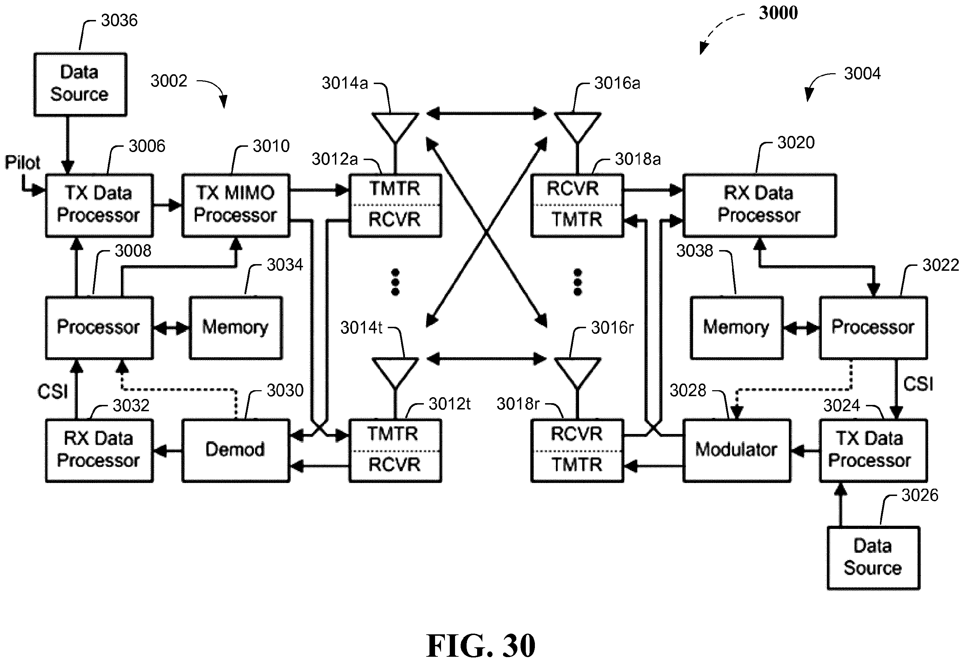

FIG. 30 is a simplified block diagram of an exemplary non-limiting MIMO system 3000 depicting an exemplary embodiment of a transmitter system 3002 (also referred to herein as the access network) and a receiver system 3004 (also referred to herein as an access terminal (AT) or user equipment (UE)).

In a non-limiting aspect, each data stream can be transmitted over a respective transmit antenna. Exemplary TX data processor 3006 can format, code, and interleave the traffic data for each data stream based on a particular coding scheme selected for that data stream to provide coded data. The coded data for each data stream may be multiplexed with pilot data using OFDM techniques. The pilot data is typically a known data pattern that is processed in a known manner and may be used at the receiver system 3004 to estimate the channel response. The multiplexed pilot and coded data for each data stream is then modulated (*e.g*., symbol mapped) based on a particular modulation scheme (*e.g*., binary phase-shift keying (BPSK), quadrature phase shift keying (QPSK), M-ary or higher-order PSK (M-PSK), or M-ary quadrature amplitude modulation (M-QAM), *etc.)* selected for that data stream to provide modulation symbols. The data rate, coding, and modulation for each data stream may be determined by instructions performed by processor 3008.

The modulation symbols for all data streams are then provided to a TX MIMO processor 3010, which may further process the modulation symbols (*e.g*., for OFDM). TX MIMO processor 3010 then provides multiple (NT) modulation symbol streams to NT transmitters (TMTR) 3012a through 3012t. In certain embodiments, TX MIMO processor 3010 applies beamforming weights to the symbols of the data streams and to the antenna from which the symbol is being transmitted.

Each transmitter 3012 receives and processes a respective symbol stream to provide one or more analog signals, and further conditions *(e.g.,* amplifies, filters, and upconverts, *etc.)* the analog signals to provide a modulated signal suitable for transmission over the MIMO channel. NT modulated signals from transmitters 3012a through 3012t are then transmitted from NT antennas 3014a through 3014t, respectively.

At receiver system 3004, the transmitted modulated signals are received by multiple (NR) antennas 3016a through 3016r and the received signal from each antenna 3016 is provided to a respective receiver (RCVR) 3018a through 3018r. Each receiver 3018 conditions (*e.g*., filters, amplifies, and downconverts, *etc.)* a respective received signal, digitizes the conditioned signal to provide samples, and further processes the samples to provide a corresponding "received" symbol stream.

A RX data processor 3030 then receives and processes the NR received symbol streams from NR receivers 3018 based on a particular receiver processing technique to provide NT "detected" symbol streams. The RX data processor 3020 then demodulates, deinterleaves, and decodes each detected symbol stream to recover the traffic data for the data stream. The processing by RX data processor 3020 is complementary to that performed by TX MIMO processor 3010 and TX data processor 3006 at transmitter system 3002.

A processor 3022 periodically determines which pre-coding matrix to use, for example, as further described herein. Processor 3022 formulates a reverse link message comprising a matrix index portion and a rank value portion.

The reverse link message may comprise various types of information regarding the communication link and/or the received data stream. The reverse link message is then processed by a TX data processor 3024, which also receives traffic data for a number of data streams from a data source 3026, modulated by a modulator 3028, conditioned by transmitters 3018a through 3018r, and transmitted back to transmitter system 3002.

At transmitter system 3002, the modulated signals from receiver system 3004 are received by antennas 3014, conditioned by receivers 3012, demodulated by a demodulator 3030, and processed by a RX data processor 3032 to extract the reserve link message transmitted by the receiver system 3004. Processor 3008 then determines which pre-coding matrix to use for determining the beamforming weights then processes the extracted message. Memory 3034 may be used to temporarily store some buffered/computational data from 3030 or 3032 through Processor 3008, store some buffered data from data source 3036, or store some specific program codes, for example, as further described herein, for example, regarding FIGS. 14, 22-28. Likewise, memory 3038 may be used to temporarily store some buffered/computational data from RX data processor 3030 through processor 3022, store some buffered data from data source 3026, or store some specific program codes, for example, as further described herein, for example, regarding FIGS. 14, 22-28.

In view of the example embodiments described supra, devices and systems that can be implemented in accordance with the disclosed subject matter will be better appreciated with reference to the diagrams of FIGS. 14, 22-28. While for purposes of simplicity of explanation, the example devices and systems are shown and described as a collection of blocks, it is to be understood and appreciated that the claimed subject matter is not limited by the order, arrangement, and/or number of the blocks, as some blocks may occur in different orders, arrangements, and/or combined and/or distributed with other blocks or functionality associated therewith from what is depicted and described herein. Moreover, not all illustrated blocks may be required to implement the example devices and systems described hereinafter. Additionally, it should be further understood that the example devices and systems and/or functionality disclosed hereinafter and throughout this specification are capable of being stored on an article of manufacture to facilitate transporting and transferring such methods to computers, for example, as further described herein. The terms computer readable medium, article of manufacture, and the like, as used herein, are intended to encompass a computer program product accessible from any computer-readable device or media such as a tangible computer readable storage medium. It can be understood that various techniques described herein may be implemented in connection with hardware or software or, where appropriate, with a combination of both. As used herein, the terms "device", "component", "system" and the like are likewise intended to refer to a computer-related entity, either hardware, a combination of hardware and software, software, or software in execution. For example, a "device", "component", subcomponent, "system" portions thereof, and so on, may be, but is not limited to being, a process running on a processor, a processor, an object, an executable, a thread of execution, a program, and/or a computer. By way of illustration, both an application running on computer and the computer can be a component. One or more components may reside within a process and/or thread of execution and a component may be localized on one computer and/or distributed between two or more computers.

It can be further understood that while a brief overview of example systems, methods, scenarios, and/or devices has been provided, the disclosed subject matter is not so limited. Thus, it can be further understood that various modifications, alterations, addition, and/or deletions can be made without departing from the scope of the embodiments as described herein. Accordingly, similar non-limiting implementations can be used or modifications and additions can be made to the described embodiments for performing the same or equivalent function of the corresponding embodiments without deviating therefrom.

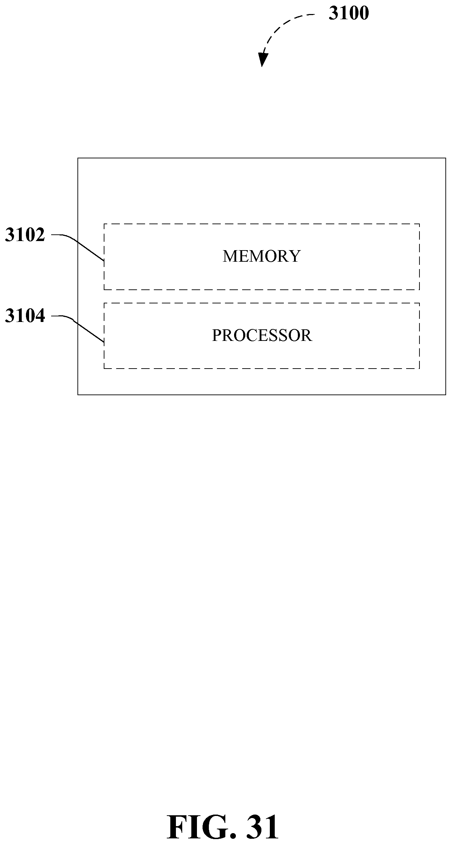

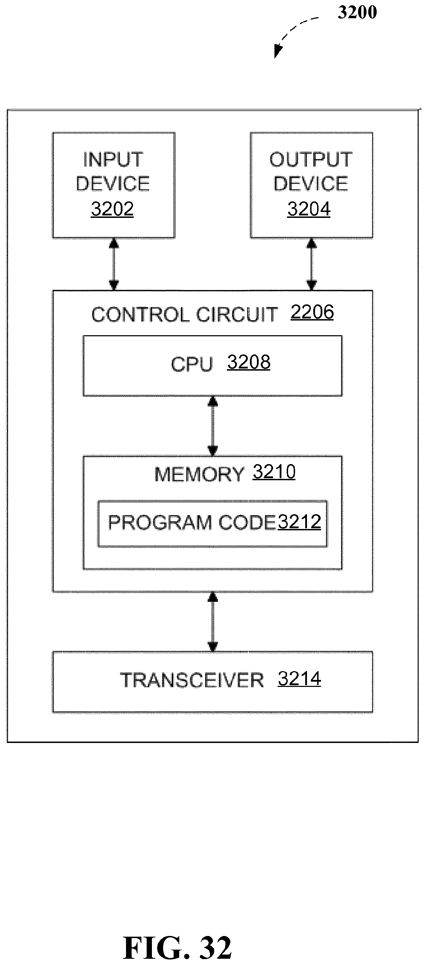

FIG. 31 illustrates an example non-limiting device or system 3100 suitable for performing various aspects of the disclosed subject matter. The device or system 3100 can be a stand-alone device or a portion thereof, a specially programmed computing device or a portion thereof (*e.g.,* a memory retaining instructions for performing the techniques as described herein coupled to a processor), and/or a composite device or system comprising one or more cooperating components distributed among several devices, as further described herein. As an example, example non-limiting device or system 3100 can comprise example of any of the devices and/or systems illustrated in FIGS. 1-30, as described above, or as further described below regarding FIGS. 32-34, for example, or portions thereof.

For example, FIG. 31 depicts an example device 3100, which can be the UE device 2916 or 2922. In another non-limiting example, FIG. 31 depicts an example device 3100, which can be an access network 2902, eNB 110 or a TRP 120, 124 or 128. The device 2100 can be configured to perform the beamforming, beam sweeping, cell selection, cell measurement, cell evaluation and the connection between the UE device and a network, as illustrated in FIGS. 1-28 and related description. The device or system 3100 can comprise a memory 3102 that retains computer-executable instructions on a tangible computer readable storage medium and those instructions can be executed by the processor 3104. Byway of the example, the UE 3100 can receive an indication to enable or disable UE beamforming. The UE can initiates a random access procedure in response to receiving the indication.

FIG. 32 depicts a simplified functional block diagram of an exemplary non-limiting communication device 3200, such as a UE device *(e.g.,* UE device configured to perform beam management comprising AT 2916, AT 2922, receiver system 3004, or portions thereof, and/or as further described herein regarding FIGS. 1-31, *etc.),* a base station *(e.g.,* a base station such as an access network 2902, a transmitter system 3002, and/or portions thereof, configured for beam handling, *etc.), etc.,* suitable for incorporation of various aspects of the subject disclosure. As shown in FIG. 32, exemplary communication device 3200 in a wireless communication system can be utilized for realizing the UEs (or ATs) 2916 and 2922 in FIG. 29, for example, and the wireless communications system such as described above regarding FIG. 29, as a further example, can be the LTE system, the NR system, *etc.* Exemplary communication device 3200 can comprise an input device 3202, an output device 3204, a control circuit 3206, a central processing unit (CPU) 3208, a memory 3210, a program code 3212, and a transceiver 3214.

Exemplary control circuit 3206 can execute the program code 3212 in the memory 3210 through the CPU 3208, thereby controlling an operation of the communications device 3200. Exemplary communications device 3200 can receive signals input by a user through the input device 3202, such as a keyboard or keypad, and can output images and sounds through the output device 3204, such as a monitor or speaker. Exemplary transceiver 3214 can be used to receive and transmit wireless signals, delivering received signals to the control circuit 3206, and outputting signals generated by the control circuit 3206 wirelessly, for example, as described above regarding FIG. 29.

Accordingly, further non-limiting embodiments as described herein can comprise a UE device *(e.g.,* UE device configured for beam handling and comprising AT 2916, AT 2922, receiver system 3004, or portions thereof, and/or as further described herein regarding FIGS. 1-24, *etc.)* that can comprise one or more of a exemplary control circuit 3206, a processor (*e.g*., CPU 3208, *etc.)* installed in the control circuit *(e.g.,* control circuit 3206), a memory *(e.g.,* memory 3210) installed in the control circuit *(e.g.,* control circuit 3206) and coupled to the processor *(e.g.,* CPU 3208, *etc.),* wherein the processor *(e.g.,* CPU 3208, *etc.)* is configured to execute a program code *(e.g.,* program code 3212) stored in the memory *(e.g.,* memory 3210) to perform method steps and/or provide functionality as described herein. As a non-limiting example, exemplary program code (*e.g*., program code 3212) can comprise computer-executable instructions as described above regarding FIG. 21, portions thereof, and/or complementary or supplementary instructions thereto, in addition to computer-executable instructions configured to achieve functionalities as described herein, regarding FIGS. 1-34, and/or any combinations thereof.

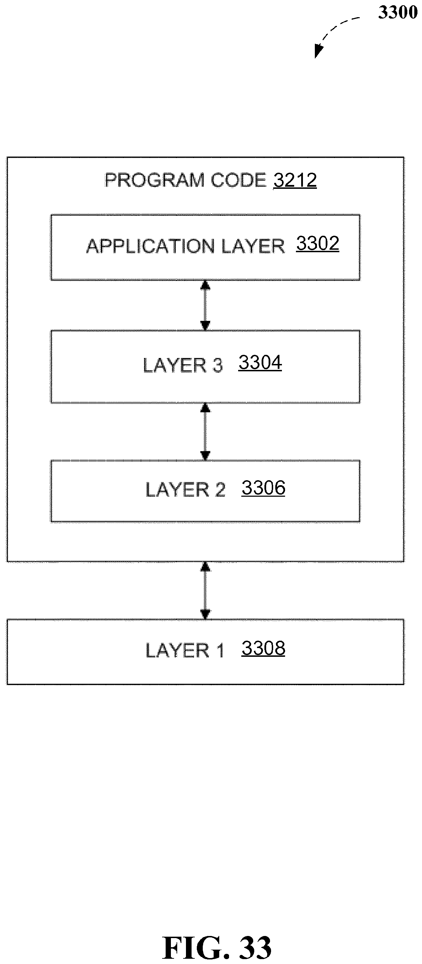

FIG. 33 depicts a simplified block diagram 3300 of exemplary program code 3212 shown in FIG. 32, suitable for incorporation of various aspects of the subject disclosure. In this embodiment, exemplary program code 3212 can comprise an application layer 3302, a Layer 3 portion 3304, and a Layer 2 portion 3306, and can be coupled to a Layer 1 portion 3308. The Layer 3 portion 3304 generally performs radio resource control. The Layer 2 portion 3306 generally performs link control. The Layer 1 portion 3308 generally performs physical connections. For LTE, LTE-A, or NR system, the Layer 2 portion 3306 may include a Radio Link Control (RLC) layer and a Medium Access Control (MAC) layer. The Layer 3 portion 3304 may include a Radio Resource Control (RRC) layer. In addition, as further described above, exemplary program code (*e.g*., program code 3212) can comprise computer-executable instructions as described above regarding FIG. 32, portions thereof, and/or complementary or supplementary instructions thereto, in addition to computer-executable instructions configured to achieve functionalities as described herein, regarding FIGS. 1-34, and/or any combinations thereof.

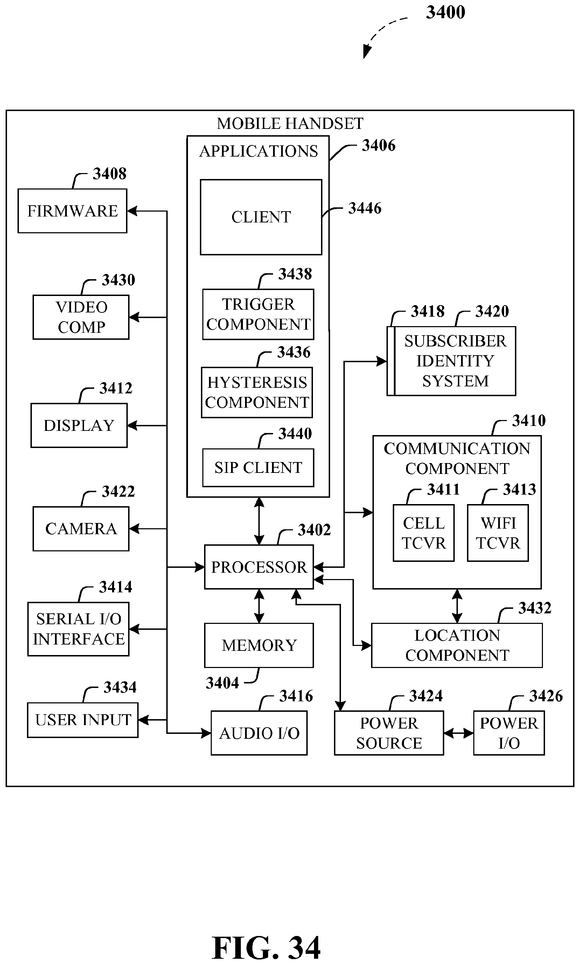

FIG. 34 depicts a schematic diagram of an example mobile device 3400 *(e.g.,* a mobile handset, UE, AT, *etc.)* that can facilitate various non-limiting aspects of the disclosed subject matter in accordance with the embodiments described herein. Although mobile handset 3400 is illustrated herein, it will be understood that other devices can be any of a number of other a mobile devices, for instance, and that the mobile handset 3400 is merely illustrated to provide context for the embodiments of the subject matter described herein. The following discussion is intended to provide a brief, general description of an example of a suitable environment 3400 in which the various embodiments can be implemented. While the description includes a general context of computer-executable instructions embodied on a tangible computer readable storage medium, those skilled in the art will recognize that the subject matter also can be implemented in combination with other program modules and/or as a combination of hardware and software. Generally, applications (*e.g*., program modules) can include routines, programs, components, data structures, *etc.,* that perform particular tasks or implement particular abstract data types. Moreover, those skilled in the art will appreciate that the methods described herein can be practiced with other system configurations, including single-processor or multiprocessor systems, minicomputers, mainframe computers, as well as personal computers, hand-held computing devices, microprocessor-based or programmable consumer electronics, and the like, each of which can be operatively coupled to one or more associated devices.

A computing device can typically include a variety of computer readable media. Computer readable media can comprise any available media that can be accessed by the computer and includes both volatile and non-volatile media, removable and non-removable media. By way of example and not limitation, computer readable media can comprise tangible computer readable storage and/or communication media. Tangible computer readable storage can include volatile and/or non-volatile media, removable and/or non-removable media implemented in any method or technology for storage of information, such as computer readable instructions, data structures, program modules, or other data. Tangible computer readable storage can include, but is not limited to, RAM, ROM, EEPROM, flash memory or other memory technology, CD ROM, digital video disk (DVD) or other optical disk storage, magnetic cassettes, magnetic tape, magnetic disk storage or other magnetic storage devices, or any other medium which can be used to store the desired information and which can be accessed by the computer. Communication media, as contrasted with tangible computer readable storage, typically embodies computer readable instructions, data structures, program modules, or other data in a modulated data signal such as a carrier wave or other transport mechanism, and includes any information delivery media. The term "modulated data signal" means a signal that has one or more of its characteristics set or changed in such a manner as to encode information in the signal, for example, as further described herein. By way of example, and not limitation, communication media includes wired media such as a wired network or direct-wired connection, and wireless media such as acoustic, RF, infrared and other wireless media. Combinations of the any of the above should also be included within the scope of computer readable communications media as distinguishable from computer-readable storage media.

The handset 3400 can include a processor 3402 for controlling and processing all onboard operations and functions. A memory 3404 interfaces to the processor 3402 for storage of data and one or more applications 3406 (*e.g*., communications applications such as browsers, apps, *etc.).* Other applications can support operation of communications and/or financial communications protocols. The applications 3406 can be stored in the memory 3404 and/or in a firmware 3408, and executed by the processor 3402 from either or both the memory 3404 or/and the firmware 3408. The firmware 3408 can also store startup code for execution in initializing the handset 3400. A communications component 3410 interfaces to the processor 3402 to facilitate wired/wireless communication with external systems, e.g., cellular networks, VoIP networks, and so on. Here, the communications component 3410 can also include a suitable cellular transceiver 3411 *(e.g.,* a GSM transceiver, a CDMA transceiver, an LTE transceiver, *etc.)* and/or an unlicensed transceiver 3413 *(e.g.,* Wireless Fidelity (WiFi^{™}), Worldwide Interoperability for Microwave Access (WiMax®)) for corresponding signal communications, and the like. The handset 3400 can be a device such as a cellular telephone, a personal digital assistant (PDA) with mobile communications capabilities, and messaging-centric devices. The communications component 3410 also facilitates communications reception from terrestrial radio networks (*e.g*., broadcast), digital satellite radio networks, and Internet-based radio services networks, and so on.

The handset 3400 includes a display 3412 for displaying text, images, video, telephony functions *(e.g.,* a Caller ID function, *etc.),* setup functions, and for user input. For example, the display 3412 can also be referred to as a "screen" that can accommodate the presentation of multimedia content *(e.g.,* music metadata, messages, wallpaper, graphics, *etc.).* The display 3412 can also display videos and can facilitate the generation, editing and sharing of video quotes. A serial I/O interface 3414 is provided in communication with the processor 3402 to facilitate wired and/or wireless serial communications (*e.g*., Universal Serial Bus (USB), and/or Institute of Electrical and Electronics Engineers (IEEE) 1494) through a hardwire connection, and other serial input devices *(e.g.,* a keyboard, keypad, and mouse). This supports updating and troubleshooting the handset 3400, for example. Audio capabilities are provided with an audio I/O component 3416, which can include a speaker for the output of audio signals related to, for example, indication that the user pressed the proper key or key combination to initiate the user feedback signal. The audio I/O component 3416 also facilitates the input of audio signals through a microphone to record data and/or telephony voice data, and for inputting voice signals for telephone conversations.

The handset 3400 can include a slot interface 3418 for accommodating a SIC (Subscriber Identity Component) in the form factor of a card Subscriber Identity Module (SIM) or universal SIM 3420, and interfacing the SIM card 3420 with the processor 3402. However, it is to be appreciated that the SIM card 3420 can be manufactured into the handset 3400, and updated by downloading data and software.

The handset 3400 can process Internet Protocol (IP) data traffic through the communication component 3410 to accommodate IP traffic from an IP network such as, for example, the Internet, a corporate intranet, a home network, a person area network, a cellular network, *etc.,* through an internet service provider (ISP) or broadband cable provider. Thus, VoIP traffic can be utilized by the handset 3400 and IP-based multimedia content can be received in either an encoded or a decoded format.

A video processing component 3422 *(e.g.,* a camera and/or associated hardware, software, *etc.)* can be provided for decoding encoded multimedia content. The video processing component 3422 can aid in facilitating the generation and/or sharing of video. The handset 3400 also includes a power source 3424 in the form of batteries and/or an alternating current (AC) power subsystem, which power source 3424 can interface to an external power system or charging equipment (not shown) by a power input/output (I/O) component 3426.

The handset 3400 can also include a video component 3430 for processing video content received and, for recording and transmitting video content. For example, the video component 3430 can facilitate the generation, editing and sharing of video. A location-tracking component 3432 facilitates geographically locating the handset 3400. A user input component 3434 facilitates the user inputting data and/or making selections as previously described. The user input component 3434 can also facilitate selecting perspective recipients for fund transfer, entering amounts requested to be transferred, indicating account restrictions and/or limitations, as well as composing messages and other user input tasks as required by the context. The user input component 3434 can include such conventional input device technologies such as a keypad, keyboard, mouse, stylus pen, and/or touch screen, for example.

Referring again to the applications 3406, a hysteresis component 3436 facilitates the analysis and processing of hysteresis data, which is utilized to determine when to associate with an access point. A software trigger component 3438 can be provided that facilitates triggering of the hysteresis component 3436 when a WiFi^{™} transceiver 1813 detects the beacon of the access point. A Session Initiation Protocol (SIP) client 3440 enables the handset 3400 to support SIP protocols and register the subscriber with the SIP registrar server. The applications 3406 can also include a communications application or client 3446 that, among other possibilities, can facilitate user interface component functionality as described above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences. Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (*e.g*., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (*e.g*., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor can read information (*e.g*., code or program code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials. While the various embodiments of the subject disclosure have been described in connection with various non-limiting aspects, it will be understood that the embodiments of the subject disclosure may be capable of further modifications. This application is intended to cover any variations, uses or adaptation of the subject disclosure following, in general, the principles of the subject disclosure, and including such departures from the present disclosure as come within the known and customary practice within the art to which the subject disclosure pertains.

Those skilled in the art will recognize that it is common within the art to describe devices and/or processes in the fashion set forth herein, and thereafter use engineering practices to integrate such described devices and/or processes into systems. That is, at least a portion of the devices and/or processes described herein can be integrated into a system via a reasonable amount of experimentation. Those having skill in the art will recognize that a typical system can include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control device (*e.g*., feedback for sensing position and/or velocity; control devices for moving and/or adjusting parameters). A typical system can be implemented utilizing any suitable commercially available components, such as those typically found in data computing/communication and/or network computing/communication systems.

Various embodiments of the disclosed subject matter sometimes illustrate different components contained within, or connected with, other components. It is to be understood that such depicted architectures are merely exemplary, and that, in fact, many other architectures can be implemented which achieve the same and/or equivalent functionality. In a conceptual sense, any arrangement of components to achieve the same and/or equivalent functionality is effectively "associated" such that the desired functionality is achieved. Hence, any two components herein combined to achieve a particular functionality can be seen as "associated with" each other such that the desired functionality is achieved, irrespective of architectures or intermediary components. Likewise, any two components so associated can also be viewed as being "operably connected," "operably coupled," "communicatively connected," and/or "communicatively coupled," to each other to achieve the desired functionality, and any two components capable of being so associated can also be viewed as being "operably couplable" or "communicatively couplable" to each other to achieve the desired functionality. Specific examples of operably couplable or communicatively couplable can include, but are not limited to, physically mateable and/or physically interacting components, wirelessly interactable and/or wirelessly interacting components, and/or logically interacting and/or logically interactable components.

With respect to substantially any plural and/or singular terms used herein, those having skill in the art can translate from the plural to the singular and/or from the singular to the plural as can be appropriate to the context and/or application. The various singular/plural permutations may be expressly set forth herein for the sake of clarity, without limitation.

It will be understood by those skilled in the art that, in general, terms used herein, and especially in the appended claims (*e.g*., bodies of the appended claims) are generally intended as "open" terms (*e.g*., the term "including" should be interpreted as "including but not limited to," the term "having" should be interpreted as "having at least," the term "includes" should be interpreted as "includes, but is not limited to," *etc.).* It will be further understood by those skilled in the art that, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limit any particular claim containing such introduced claim recitation to embodiments containing only one such recitation, even when the same claim includes the introductory phrases "one or more" or "at least one" and indefinite articles such as "a" or "an" *(e.g.,* "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (*e.g*., the bare recitation of "two recitations," without other modifiers, means at least two recitations, or two or more recitations). Furthermore, in those instances where a convention analogous to "at least one of A, B, and C, *etc."* is used, in general such a construction is intended in the sense one having skill in the art would understand the convention *(e.g.,* " a system having at least one of A, B, and C" would include, but not be limited to, systems that have A alone, B alone, C alone, A and B together, A and C together, B and C together, and/or A, B, and C together, *etc.).* In those instances where a convention analogous to "at least one of A, B, or C, *etc."* is used, in general such a construction is intended in the sense one having skill in the art would understand the convention (*e.g*., " a system having at least one of A, B, or C" would include but not be limited to systems that have A alone, B alone, C alone, A and B together, A and C together, B and C together, and/or A, B, and C together, *etc.).* It will be further understood by those skilled in the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible sub-ranges and combinations of sub-ranges thereof. Any listed range can be easily recognized as sufficiently describing and enabling the same range being broken down into at least equal halves, thirds, quarters, fifths, tenths, *etc.* As a non-limiting example, each range discussed herein can be readily broken down into a lower third, middle third and upper third, *etc.* As will also be understood by one skilled in the art all language such as "up to," "at least," and the like include the number recited and refer to ranges which can be subsequently broken down into sub-ranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

From the foregoing, it will be noted that various embodiments of the disclosed subject matter have been described herein for purposes of illustration, and that various modifications may be made without departing from the scope and spirit of the subject disclosure. Accordingly, the various embodiments disclosed herein are not intended to be limiting, with the true scope and spirit being indicated by the appended claims.

In addition, the words "example" and "non-limiting" are used herein to mean serving as an example, instance, or illustration. For the avoidance of doubt, the subject matter disclosed herein is not limited by such examples. Moreover, any aspect or design described herein as "an example," "an illustration," "example" and/or "non-limiting" is not necessarily to be construed as preferred or advantageous over other aspects or designs, nor is it meant to preclude equivalent example structures and techniques known to those of ordinary skill in the art. Furthermore, to the extent that the terms "includes," "has," "contains," and other similar words are used in either the detailed description or the claims, for the avoidance of doubt, such terms are intended to be inclusive in a manner similar to the term "comprising" as an open transition word without precluding any additional or other elements, as described above.

As mentioned, the various techniques described herein can be implemented in connection with hardware or software or, where appropriate, with a combination of both. As used herein, the terms "component," "system" and the like are likewise intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on computer and the computer can be a component. In addition, one or more components can reside within a process and/or thread of execution and a component can be localized on one computer and/or distributed between two or more computers.

Systems described herein can be described with respect to interaction between several components. It can be understood that such systems and components can include those components or specified sub-components, some of the specified components or sub-components, or portions thereof, and/or additional components, and various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and that any one or more middle component layers, such as a management layer, can be provided to communicatively couple to such sub-components in order to provide integrated functionality, as mentioned. Any components described herein can also interact with one or more other components not specifically described herein but generally known by those of skill in the art. As mentioned, in view of the example systems described herein, methods that can be implemented in accordance with the described subject matter can be better appreciated with reference to the flowcharts of the various figures and vice versa. While for purposes of simplicity of explanation, the methods can be shown and described as a series of blocks, it is to be understood and appreciated that the claimed subject matter is not limited by the order of the blocks, as some blocks can occur in different orders and/or concurrently with other blocks from what is depicted and described herein. Where non-sequential, or branched, flow is illustrated via flowchart, it can be understood that various other branches, flow paths, and orders of the blocks, can be implemented which achieve the same or a similar result. Moreover, not all illustrated blocks can be required to implement the methods described hereinafter.

While the disclosed subject matter has been described in connection with the disclosed embodiments and the various figures, it is to be understood that other similar embodiments may be used or modifications and additions may be made to the described embodiments for performing the same function of the disclosed subject matter without deviating therefrom. Still further, multiple processing chips or multiple devices can share the performance of one or more functions described herein, and similarly, storage can be effected across a plurality of devices. In other instances, variations of process parameters (*e.g*., configuration, number of components, aggregation of components, process step timing and order, addition and/or deletion of process steps, addition of preprocessing and/or post-processing steps, *etc.)* can be made to further optimize the provided structures, devices and methods, as shown and described herein. In any event, the systems, structures and/or devices, as well as the associated methods described herein have many applications in various aspects of the disclosed subject matter, and so on. Accordingly, the subject disclosure should not be limited to any single embodiment, but rather should be construed in breadth, spirit and scope in accordance with the appended claims.

## Claims

1. A method for a network node, comprising:
transmitting an indication to a user equipment, in the following also referred to as UE, to one of enable or disable UE beamforming and to initiate a random access procedure (2202).

2. The method of claim 1, further comprising: the network node transmitting an information together with the indication (2204).

3. The method of claim 2, wherein the information includes at least configuration information related to the random access procedure.

4. The method of claim 2 or 3, wherein the indication and the information are provided by the same radio resource control, in the following also referred to as RRC, message.

5. The method of any one of claims 1 to 4, wherein the indication includes an indication to one of enable or disable UE beamforming for a cell of the UE.

6. A method for a user equipment, in the following also referred to as UE, comprising:
receiving an indication to one of enable or disable UE beamforming (2302; 2802); and
initiating a random access procedure in response to reception of the indication (2304; 2804).

7. The method of claim 6, wherein the UE enables UE beamforming, in response to the reception of the indication, to perform the random access procedure (2804).

8. The method of claim 6 or 7, wherein the UE receives an information together with the indication.

9. The method of claim 8, wherein the information includes at least configuration information related to the random access procedure.

10. The method of claim 8 or 9, wherein the indication and the information are provided by the same radio resource control, in the following also referred to as RRC, message.

11. The method of any one of claims 6 to 10, wherein the UE triggers an associated power headroom report in response to receiving the indication.

12. The method of any one of claims 6 to 11, wherein the indication includes an indication to one of enable or disable UE beamforming for a cell of the UE.

13. A network node, comprising:
a control circuit (2206);
a processor (3208) installed in the control circuit (2206);
a memory (3210) installed in the control circuit (2206) and coupled to the processor (3208);
wherein the processor (3208) is configured to execute a program code (3212) stored in the memory (3210) to perform operations comprising the method steps as defined in any one of the preceding claims 1 to 5.

14. A user equipment, in the following also referred to as UE, comprising:
a control circuit (2206);
a processor (3208) installed in the control circuit (2206);
a memory (3210) installed in the control circuit (2206) and coupled to the processor (3208);
wherein the processor (3208) is configured to execute a program code (3212) stored in the memory (3210) to perform operations comprising the method steps as defined in any one of the preceding claims 6 to 12.
